(19) **Europäisches Patentamt**
**European Patent Office**
**Office européen des brevets**

(11) Veröffentlichungsnummer: **0 324 155 B1**

(12) # EUROPÄISCHE PATENTSCHRIFT

(45) Veröffentlichungstag der Patentschrift: **19.04.95**

(51) Int. Cl.⁶: **A23N 7/04**, B26F 3/00

(21) Anmeldenummer: **88121590.9**

(22) Anmeldetag: **23.12.88**

Verbunden mit 89901332.0/0387303
(europäische
Anmeldenummer/Veröffentlichungsnummer)
durch Entscheidung vom 18.11.91.

(54) **Verfahren zum simultanen und/oder konsekutiven Entfernen von Oberflächenschichten im wesentlichen rotationssymmetrischer Gegenstände, insbesondere von Gemüsesorten wie Spargel, Schwarzwurzeln, Möhren und dergleichen, sowie Vorrichtung zur Ausführung dieses Verfahrens.**

(30) Priorität: **24.12.87 DE 3744043**

(43) Veröffentlichungstag der Anmeldung:
**19.07.89 Patentblatt 89/29**

(45) Bekanntmachung des Hinweises auf die
Patenterteilung:
**19.04.95 Patentblatt 95/16**

(84) Benannte Vertragsstaaten:
**AT BE CH DE ES FR IT LI NL**

(56) Entgegenhaltungen:
**EP-A- 0 039 958**
**EP-A- 0 223 111**
**WO-A-87/02225**
**DE-A- 2 045 900**
**GB-A- 2 180 142**

(73) Patentinhaber: **JOSEF ZIEGLER GMBH LAND-
MASCHINEN- und APPARATEBAU
Schrobenhausener Strasse 56
D-86554 Pöttmes (DE)**

(72) Erfinder: **Giessner, Frank Prof. Dr.-Ing.
Thelottstrasse 9
D-8900 Augsburg (DE)**

(74) Vertreter: **Lemke, Jörg-Michael, Dipl.-Ing.
Schmiedstrasse 1, Hausen
D-86447 Aindling (DE)**

Rank Xerox (UK) Business Services
(3.10/3.09/3.3.3)

## Beschreibung

Die Erfindung betrifft ein Verfahren zum simultanen und/oder konsekutiven Entfernen von Oberflächenschichten im wesentlichen rotationssymmetrischer Gegenstände, insbesondere von Gemüsesorten wie Spargel, Schwarzwurzeln, Möhren und dergleichen, wobei das Entfernen mittels mindestens eines am Umfang des Gegenstandes angreifenden Strahls aus einer Druckflüssigkeit wie Wasser oder dergleichen vorgenommen wird, und wobei Strahl und Gegenstand relativ zueinander bewegt werden.

Ein solches Verfahren ist aus der WO-A-87/02225 bekannt. Dort wird jedoch kein Schneidstrahl beschrieben, sondern ein mehr oder weniger senkrecht auf die Oberfläche des zu bearbeitenden Gegenstands auftreffender Strahl, der in eine gewisse Tiefe des Gegenstandes eindringt und die Oberfläche absprengt. Von einem Wegschneiden oder Abschälen der Oberfläche ist keine Rede.

Aus der DE-PS 219 854 ist ein Spargelschäler bekannt, bei welchem der jeweilige Spargel von Hand durch einen stationären Arbeitsring mit einer Mehrzahl von allseits an der Spargeloberfläche angreifenden, federnd zustellbaren Messern hindurchführbar ist. Die dabei auf den empfindlichen Spargel ausgeübten, in Achsrichtung wirkenden Zugkräfte sind zu grob; es ist zu erwarten, daß der Spargel reißt, abbricht oder dergleichen, zumal er naturgemäß von Hand nicht genau axial geführt werden wird.

Ausgeführte Vorrichtungen der genannten Art sind nicht bekannt geworden. Dies gilt auch für anderweitige Vorrichtungen dieser Art.

Die der Erfindung zugrunde liegende Aufgabe wird darin gesehen, ein Verfahren der genannten Art sowie eine Vorrichtung zur Ausführung desselben zu schaffen, die es ermöglichen, rotationssymmetrische Gegenstände, insbesondere längliche Gemüse wie Spargel, mit wechselnder Kontur und verschiedener Stärke, auch leicht gekrümmte Exemplare, auf schonendere Weise zu schälen, und zwar unter Vermeidung eines Verschiebens oder Verdrehens des jeweiligen Gegenstands.

Diese Aufgabe wird verfahrensgemäß dadurch gelöst, daß der Schneidstrahl bzw. die Schneidstrahlen im wesentlichen quer zur Axialrichtung des Gegenstands angeordnet ist bzw. sind uns senkrecht zu derselben in Anpassung an die Kontur des Gegenstandes und zur Einstellung der gewünschten Schichtdicke verschwenkt wird bzw. werden.

Vorzugsweise wird dabei der Schneidstrahl bei stationärem Gegenstand bewegt, und zwar in Axialrichtung. Muß ein Schneidstrahl mehrere Schneidvorgänge längs des Umfangs des Gegenstands durchführen, dann wird der Schneidstrahl auch in Umfangsrichtung bewegt, nämlich abschnittsweise jeweils nach einem Schälschritt über die Länge des Gegenstands.

Das Druckmittel des Schneidstrahls besitzt einen solchen Druck bzw. trifft mit einer solchen Geschwindigkeit entsprechend gebündelt auf das Schneidgut bzw. den Gegenstand auf, daß ein sauberes Abtrennen der jeweiligen Oberflächenschicht bzw. ein Schälen erreicht wird, bei welchem minimale Transversalkräfte auf den vorzugsweise stationären, somit während der Bearbeitung in seiner Ausgangslage verbleibenden Gegenstand ausgeübt werden.

Vorrichtungsmäßig wird die Aufgabe gemäß einer bevorzugten Ausführungsform gelöst durch ein eine Längsachsrichtung aufweisendes Gestell, in das der jeweilige Spargel in im wesentlichen horizontaler Lage mittels eines in Längsachsrichtung am Gestell geführten Greifers in Achsrichtung einbringbar und arretierbar ist, und durch einen Arbeitsring, der so ausgebildet ist, daß er den eingebrachten und arretierten Spargel umgibt, ebenfalls in Längsachsrichtung relativ zum Gestell geführt ist und an seinem Umfang eine Düse oder verteilt mehrere Düsen für die Ausbildung des Schneidstrahls bzw. der Schneidstrahlen aufweist, derart, daß bei einem Verschieben des Arbeitsrings längs seiner Führung der Umfang des Spargels bestreichbar ist, wobei jede Düse im wesentlichen senkrecht zur Längsachsrichtung nach beiden Seiten begrenzt verschwenkbar ist, derart, daß jeder Schneidstrahl in den Spargel einerseits hineinschneiden und andererseits aus diesem wieder herausschneiden kann.

Der Greifer kann aus einer vorzugsweise hydraulisch betätigbaren Nürnberger Schere mit Greiferplatten bzw. -schalen an ihren schwenkbaren Enden bestehen, die einschließlich ihrer Betätigung an einer Stange angeordnet ist, die ihrerseits in einem gestellfesten Lager koaxial verschiebbar und einstellbar ist.

Die axiale Führung des Arbeitsrings besteht vorzugsweise aus zwei Stangen und zwei auf diesen Stangen gelagerten, am Arbeitsring befestigten und mit diesem verschiebbaren Gleitstücken, wobei an mindestens einem der Gleitstücke eine die Verschiebung bewirkende Betätigungseinrichtung angreift, und wobei die vorgenannte Anordnung mittels der Enden der Stangen mit zwei in den einander gegenüberliegenden Stirnwänden des Gestells koaxial drehbar gelagerten Schwenkscheiben fest verbunden und mit diesen im wesentlichen koaxial um den Spargel begrenzt verschwenkbar ist.

Die Betätigungseinrichtung für den Arbeitsring kann aus einem an einem der Gleitstücke angreifenden Seilzug mit Umlenkrollen an den Schwenkscheiben und einem auf einer der Schwenkscheiben angeordneten motorischen Antrieb bestehen.

2

Ganz allgemein gilt, daß für sämtliche Antriebe der erfindungsgemäßen Vorrichtung sowohl elektrische als auch hydraulische und pneumatische, auch elektromagnetische Antriebe in Frage kommen.

Bei Vorhandensein mehrerer Düsen sind diese derart am Arbeitsring angeordnet, daß sich die Reaktionskräfte und Reaktionsmomente der von ihnen abgegebenen Schneidstrahlen gegenseitig praktisch neutralisieren und im wesentlichen keine Resultierende bezüglich der Führung des Arbeitsrings verbleibt. Es soll somit Gleichgewicht bezüglich der beim Schneidvorgang entstehenden Kräfte und Momente vorhanden sein.

Vorteilhaft ist jeder Düse ein elektromagnetischer, vorzugsweise mit Licht arbeitender Sensor zur Abtastung der Kontur des Spargels und zur Überwachung der Schalendicke während des Schälvorgangs zugeordnet. Es ist jedoch auch eine mechanische Abtastung möglich.

Ferner ist zweckmäßig jede Düse im wesentlichen senkrecht zur Axialrichtung nach beiden Seiten, somit in einer zur Mittelebene des Arbeitsrings parallelen Ebene, begrenzt verschwenkbar, derart, daß jeder Schneidstrahl, beispielsweise in einen Spargel, einerseits hineinschneiden und andererseits wieder heraustreten kann.

Jeder Düse am Arbeitsring gegenüberliegend kann ein Trichter zum Auffangen des Schneidstrahls, unabhängig von dessen Schwenklage, angeordnet sein.

Vorzugsweise sind in jeweils einer Ebene quer zur Achs- bzw. Axialrichtung zwei einander entgegengesetzt austretende Schneidstrahlen in einem solchen Abstand voneinander am Arbeitsring angeordnet, daß jeder zu schälende Gegenstand, z.B. Spargel, zwischen ihnen einfaßbar ist, wobei der Schwenkbereich jedes Schneidstrahles die Kontur des Spargels kreuzt. Dabei sind mindestens zwei Ebenen mit jeweils zwei Schneidstrahlen in Axialabstand voneinander zweckmäßig. Gemäß einer bevorzugten Ausführungsform sind vier Ebenen mit insgesamt acht Schneidstrahlen vorgesehen. Ferner können am Arbeitsring mindestens zwei in und außer Anlage am jeweiligen Spargel schwenkbare, axial in Abstand angeordnete Zentrierrollen vorgesehen sein.

Die den Greifer tragende Stange arbeitet gemäß einer bevorzugten Ausführungsform mit einem gestellfesten Taktlineal zusammen, mittels dessen die Stellung der Stange in Abhängigkeit von der Spargellänge über eine Lichtschranke abtastbar und in eine Regeleinheit für die Regelung der einzelnen Arbeitsschritte einspeisbar ist.

Vorzugsweise führt eine Vorrichtung unter Verwendung eines Mikroprozessors die Verfahrenssteuerung durch, wobei die jeweiligen Eingänge in den Mikroprozessor von Signalen von jeweiligen Sensoren gebildet werden, wohingegen Ausgänge aus dem Mikroprozessor Signale an die jeweiligen Stellglieder bedeuten. Dabei werden vorrichtungsmäßig Sensoren nicht nur in Verbindung mit den Düsen der Schneidstrahlen verwendet, wobei eine Abtastung der Kontur des Spargels und eine Einstellung der Schalendicke erfolgen kann, sondern auch im Hinblick auf das Erfassen, Hineinziehen und stationäre Haltern eines zu bearbeitenden Gegenstands bzw. Spargels entsprechend seiner Länge, sowie der jeweiligen Lage des Arbeitsrings über die Länge des Spargels.

Die Richtung des Schneidstrahls läßt sich innerhalb des Schwenkbereichs senkrecht zur Achsrichtung und damit auch die Schalendicke während des Schälens variieren, indem mittels des beispielsweise optischen Sensors die Kontur der Spargelstange vor oder am Schnittort abgetastet wird und die jeweilige Düse bzw. jeweiligen Düsen nachfolgend über die elektronische Regeleinrichtung verstellt wird bzw. werden. So läßt sich auch bei einer ungleichmäßigen Kontur eine gleichmäßige Schalendicke erzielen, wobei die Kontur der Schnittfläche der ursprünglichen Kontur der Spargelstange entspricht.

Die Spargelstange wird durch eine konzentrische Öffnung einer der Schwenkscheiben hindurch am Fuß erfaßt und so weit in den Schälbereich der Vorrichtung hineingezogen, daß der Kopf innerhalb des Gestells, jedoch außerhalb des Schälbereichs auf einer stützenden Auflage zu liegen kommt, wobei das Ende des Einzugs durch eine Lichtschranke im Kopfbereich des Spargels signalisiert wird. Sodann klappen die Zentrierrollen an die Spargelstange heran. Der Arbeitsring mit den Zentrierrollen und den Düsen verfährt nun axial am Spargel entlang bis vor zum Kopf, wobei die Schneidstrahlen, vorzugsweise aus Druckwasser, Schalen abschneiden. Je nach der Anzahl und der Anordnung der Düsen um den Spargel herum ergeben sich mehr oder weniger plane, geschälte Flächen. Durch Verwendung beispielsweise von acht Düsen, die ein Wasserstrahlachteck bilden, läßt sich ein im Querschnitt achteckiges Spargelprofil schneiden. Wird ein solches Profil noch als zu grob bzw. kantig angesehen, so lassen sich entweder noch weitere Düsen installieren oder es lassen sich durch einen Winkelschwenk der Düsen oder der vom Arbeitsring, dessen Führung und den Schwenkscheiben gebildeten Anordnung bei Rückhub erneut beispielsweise acht Kanten abtrennen, so daß ein im Querschnitt sechzehneckiges Profil gebildet wird, das sich bereits sehr weitgehend der ursprünglich runden Form des Spargels annähert.

Die Verwendung von Wasser als Druckmittel ist insofern vorteilhaft, als das Schälen besonders hygienisch bei dauernder Selbstreinigung der Vorrichtung, Entfernung von Schmutz und dergleichen möglich ist.

Die Erfindung und ihre vorteilhaften Ausgestaltungen sind im folgenden anhand einer in der Zeichnung dargestellten, bevorzugten Ausführungsform näher erläutert.

Es zeigt:

Fig. 1      eine schematische, ausschnitthafte Schrägansicht einer Vorrichtung nach der Erfindung, bei welcher der Übersichtlichkeit halber einige Teile weggelassen worden sind;

Fig. 2      einen Ausschnitt aus Fig. 1 in schematisierter und in Einzelheiten abgewandelter Ausführung;

Fig. 3      eine vergrößerte Draufsicht auf den hier nur schematisch dargestellten Greifer der Vorrichtung nach Fig. 2, teilweise geschnitten;

Fig. 4      eine vergrößerte Draufsicht auf das Greiferende gemäß einer weiteren Ausführungsform;

Fig. 4a      einen Schnitt längs der Linie IVa-IVa in Fig. 4;

Fig. 5      eine Seitenansicht der Ausführungsform nach Fig. 4, teilweise geschnitten;

Fig. 6      eine Ansicht des Arbeitsrings der Vorrichtung nach den Fig. 1 und 2 in Pfeilrichtung H in Fig. 2;

Fig. 7      die ausschnitthafte Darstellung von Einzelheiten des Arbeitsrings mit Düse und Sensor im Verhältnis zu einem schematisch dargestellten Spargel in schaubildlicher Ansicht;

Fig. 8      eine räumlich der Fig. 6 entsprechende, schematische Darstellung des Kräfte- und Momentengleichgewichts der am Spargel angreifenden Schneidstrahlen;

Fig. 9      eine abweichende Ausführungsform mit mechanischer Abtastung der Spargelkontur in schematischer, teilweise geschnittener Ansicht;

Fig. 10      eine weitere, vereinfachte Ausführungsform der Erfindung, teilweise geschnitten;

Fig. 11      einen Schnitt längs der Linie XI-XI in Fig. 10;

Fig. 12      einen Schnitt längs der Linie XII-XII in Fig. 11;

Fig. 13      einen Schnitt längs der Linie XIII-XIII in Fig. 11;

Fig. 14      eine Ausführungsform einer Vorrichtung zur optischen Erfassung der Kontur eines zu schälenden Gegenstands mittels abtastender Sensoren im schematischen Aufbau;

Fig. 15      eine Darstellung der Relativbewegung der abtastenden Sensoren, aufgetragen über die Länge des zu schälenden Gegenstands;

Fig. 15a      eine Einzelheit der Fig. 15 in vergrößertem Maßstab;

Fig. 16      ein vereinfachtes Interpolationsverfahren zur Auslenkung des jeweiligen Schneidstrahles;

Fig. 16a      eine Einzelheit der Fig. 16 in vergrößertem Maßstab;

Fig. 17      das Blockschaltbild einer rechnergesteuerten Vorrichtung zur optischen Erfassung der Kontur des zu schälenden Gegenstands und zur entsprechenden Auslenkung der Schneidstrahlen.

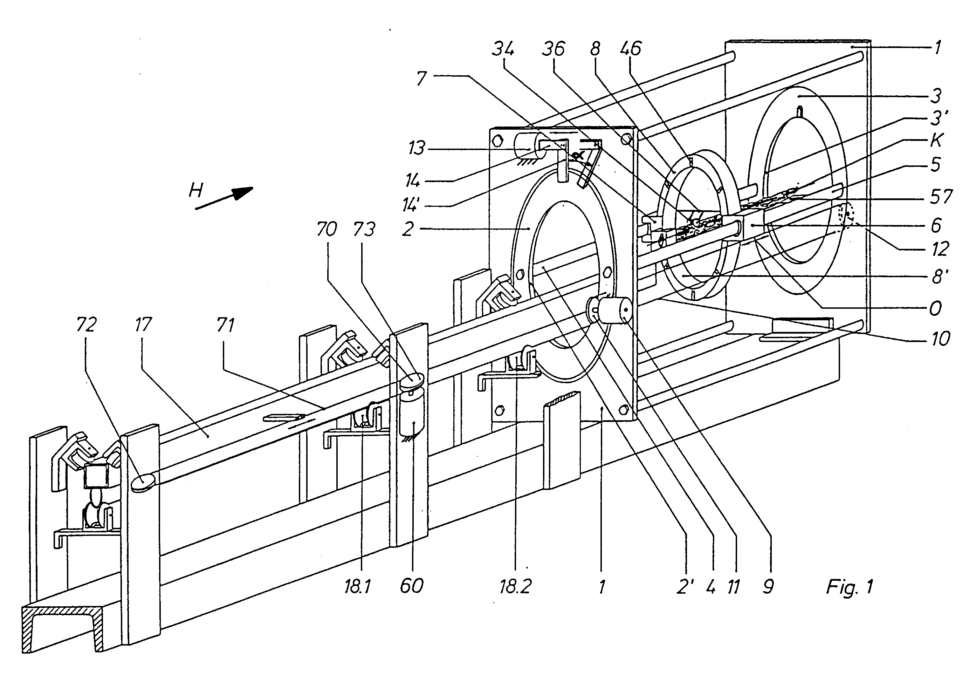

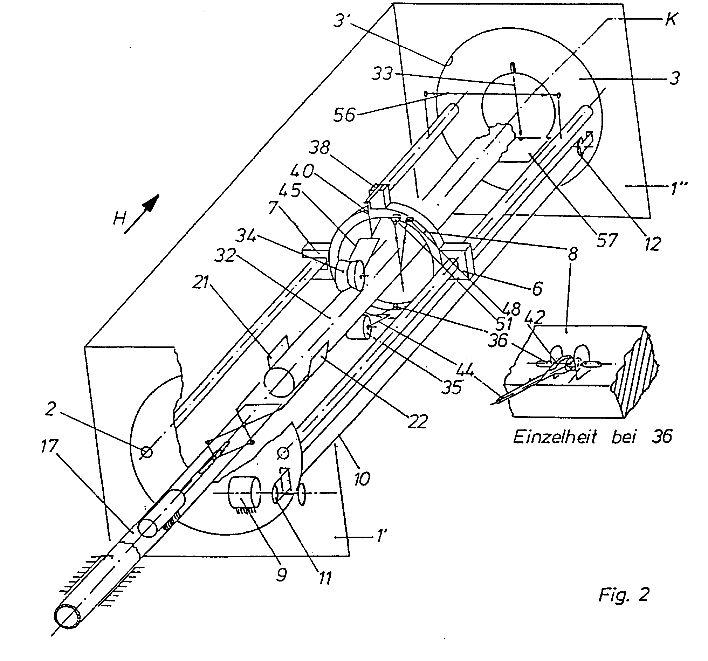

Wie aus den Fig. 1 und 2 hervorgeht, sind in einem Gestell 1 zwei Schwenkscheiben 2 und 3 drehbar gelagert. Zwei an denselben befestigte Stangen 4 und 5 bewirken, daß sich die Ringe 2, 3 jeweils synchron drehen lassen. Auf den Stangen 4 und 5 sind an einem Arbeitsring 8 befestigte Gleitstücke 6 und 7 gelagert, mittels derer sich der Arbeitsring in den Richtungen des Doppelpfeils O translatorisch bewegen läßt. Diese Bewegung kann mittels eines Elektromotors 9, eines Seilzugs 10 und zweier Umlenkrollen 11 und 12 (Fig. 2) erfolgen, wobei der Seilzug an einem der Gleitstücke angreift, hier am Gleitstück 6.

Die Drehbarkeit der Schwenkscheiben 2 und 3 ist auf einen Schwenkwinkel $\alpha$ begrenzt. Bei der gezeigten Ausführungsform erfolgt das jeweilige Schwenken um die Achsrichtung K mittels eines Elektromagneten 13 über einen am nichtgezeigten Tauchanker befestigten Stößel 14, der an einem an der Schwenkscheibe 2 angeordneten Hebel 14' angelenkt ist.

Die beiden Schwenkscheiben 2 und 3 besitzen im wesentlichen konzentrische und kreisförmige, mit der Öffnung 8' des Arbeitsrings 8 fluchtende Durchbrechungen 2' und 3'.

Am Gestell fest ist ein axial geführter Greifer aus einer vorzugsweise hydraulisch betätigbaren Nürnberger Schere 19, 20, 27, 28 mit Greiferplatten 21, 22 an ihren schwenkbaren Enden vorgesehen, wobei diese Schere einschließlich ihrer vorzugsweise elektromagnetischen Betätigung mittels Tauchanker 25, Elektromagnet 26 und Gelenkbolzen 29 an einer Stange 17 angeordnet ist, die ihrerseits in Lagern 18.1, 18.2 koaxial verschiebbar und in diesen einstellbar ist.

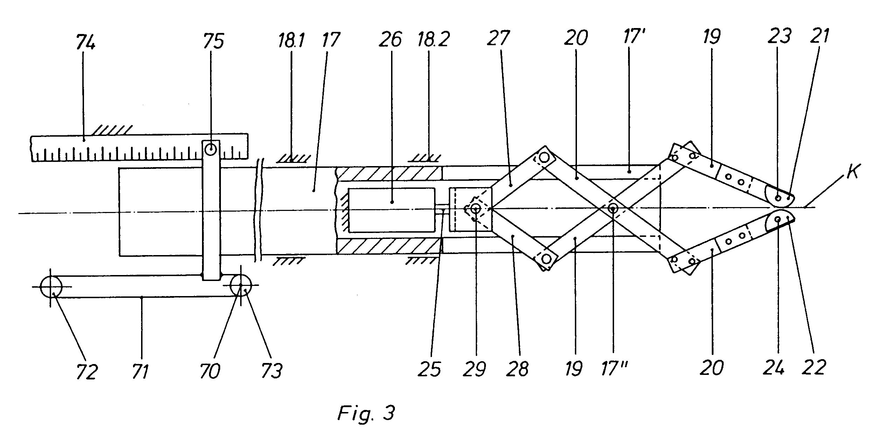

Mit den Greiferplatten 21, 22 erfaßt der Greifer den Fuß beispielsweise einer Spargelstange jenseits der Schwenkscheibe 3, klemmt diesen fest und zieht ihn in das Gestell 1 in die in Fig. 1 gezeigte Lage. Der Antrieb der Greiferstange 17 erfolgt mittels eines Motors 60 auf einer Welle 70 über einen Seilzug 71 und Umlenkrollen 72 und 73. Ferner ist gemäß Fig. 3 ein gestellfestes Taktlineal 74 vorgesehen, mit dem die den Greifer tragende Stange 17 zusammenarbeitet. Das Taktlineal 74 wird von einer Lichtschranke 75 abgetastet und meldet die jeweilige Stellung der Greiferstange 17 an einen nichtgezeigten Mikroprozessor, worauf weiter unten noch näher eingegangen werden wird. In Fig. 3 ist der Motor 60 weggelassen worden.

Die Nürnberger Schere besitzt zwei Greiferarme 19, 20, die die Greiferplatten 21, 22 tragen, die wiederum um gewisse Winkelbeträge drehbar in Gelenken 23 und 24 gelagert sind, derart, daß sie in einer die Achsrichtung K enthaltenden, gemeinsamen Ebene verschwenkbar sind. Über den Tauchanker 25 und den Elektromagneten 26 werden Verbindungsglieder 27 und 28 bewegt, die einerseits am mit dem Tauchanker 25 verschiebbaren Gelenkbolzen 29 und andererseits an den Enden der Greiferarme 19 und 20 angelenkt sind, die an ihren jeweils anderen Enden die Greiferplatten 21 und 22 tragen. Die beiden Greiferarme 19 und 20 sind dabei um einen stationären Gelenkpunkt 17″ in einem Schlitz 17′ der zumindest in diesem Bereich als Rohr ausgebildeten Stange 17 gelagert. Es ist offensichtlich, wie durch eine Bewegung des Tauchankers 25 die Greiferplatten 21 und 22 den Fuß eines Spargels ergreifen und wieder loslassen können.

Das Ende des Einzugs des Spargels 32 mittels der Greiferplatten 21, 22 durch die Schwenkscheibe 3 hindurch wird durch eine an dieser Schwenkscheibe 3 angeordnete Lichtschranke 33 angezeigt, nämlich dadurch, daß der Kopf des Spargels an dieser Lichtschranke 33 vorbeifährt und den Lichtstrahl Spargelkopf wird in diesem Bereich durch eine Kopfplatte 57 gestützt.

Anschließend wird der Arbeitsring 8 mittels des am Gleitstück 6 angreifenden Seilzugs 10 mit Umlenkrollen 11, 12 an den Schwenkscheiben 2, 3 vom auf der Schwenkscheibe 2 angeordneten motorischen Antrieb 9, 11 zum Fußende der Spargelstange möglichst nah an die Greiferplatten 21, 22 gefahren, um möglichst wenig Abfall durch das später abzutrennende Fußende zu erzeugen. Des Verlagern des Arbeitsrings 8 kann bereits während des Einzugs der Spargelstange geschehen. Auf unterschiedliche Längen des Spargels wird mittels der Lichtschranke 33 reagiert, derart, daß der Einzug der Spargelstange durch den Greifer in das Gestell unterschiedlich erfolgt. Der dabei zurückgelegte Weg wird anschließend über das Taktlineal 74 optoelektronisch entlang der Greiferstange ermittelt, so daß der dabei sich ergebende Wert elektronisch übertragen und der Ansteuerlogik des Zugmotors 9 gemeldet werden kann, derart, daß dieser Motor seinen Verfahrweg kennt und sich die erfindungsgemäße Vorrichtung jeder Spargelstangenlänge automatisch anpassen kann.

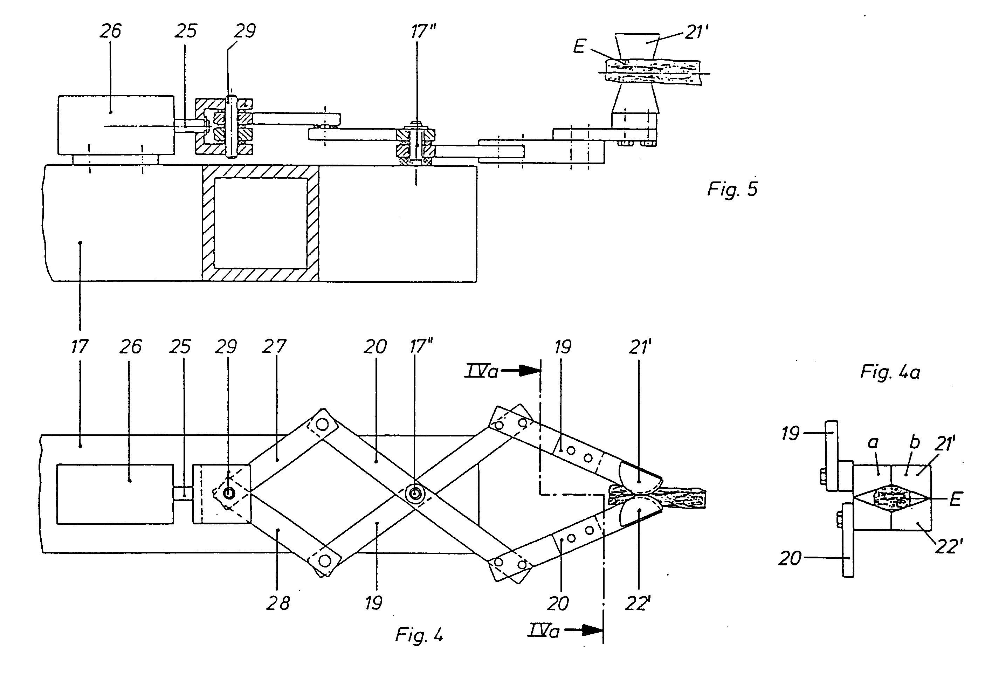

In den Fig. 4, 4a und 5 ist eine konkrete, gegenüber der Ausführungsform nach Fig. 3 etwas abgewandelte Ausführungsform der Greifereinrichtung dargestellt, wobei gleiche Bezugszeichen für gleiche Teile verwendet wurden. Dabei ist unter Verzicht auf den Schlitz 17′ die Nürnberger Schere nicht in dem Vierkantrohr, sondern auf dem Vierkantrohr 17 angeordnet. Ferner sind anstelle der verschwenkbaren Greiferplatten 21 und 22 zum Spargelende hin abgerundete Greifstücke 21′ und 22′ verwendet worden. Der stationäre Gelenkpunkt 17′ befindet sich in diesem Falle auf der Stange 17, nicht innerhalb derselben. Wie die Fig. 4 und 4a zeigen, besitzen die Greifstücke 21′ und 22′ dem Spargelende E zugewandte Flächen, die sich jeweils aus den Mantelflächen zweier mit ihren Enden geringeren Durchmessers aneinanderstoßender Teilkegelstümpfe a und b bilden.

Der Zugmotor 9 stellt den Arbeitsring 8 mit bei der gezeigten Ausführungsform zwei an Gelenken 36 (von denen in Fig. 2 nur das untere Gelenk sichtbar ist) schwenkbar befestigten Rollen 34 und 35, die bei dieser Bewegung noch vom Spargel abgehoben sind, an den Startpunkt nahe den Greiferplatten 21, 22. Zwei Klappankermagnete 38, von denen nur der obere sichtbar ist (Fig. 2) sorgen für das Abheben der Rollen 34, 35 über Zugstangen, von denen nur die Zugstange 40 gezeigt ist. Werden die Magnete abgeschaltet, schwenken Drehfedern 42 (siehe Ausschnittszeichnung in Fig. 2) die Rollen 34 und 35 über Gabeln 44 und 45 in Anlage an dem Spargel.

Durch eine entsprechend konkave Berührungsoberfläche zumindest einer der Rollen 34 und 35, im vorliegenden Fall der vorhandenen Dreiecknut der Rolle 34, wird der Spargel hinsichtlich des Arbeitsrings 8 zentriert. Es versteht sich, daß auch zwei oder mehr Zentrierrollen verwendet werden können.

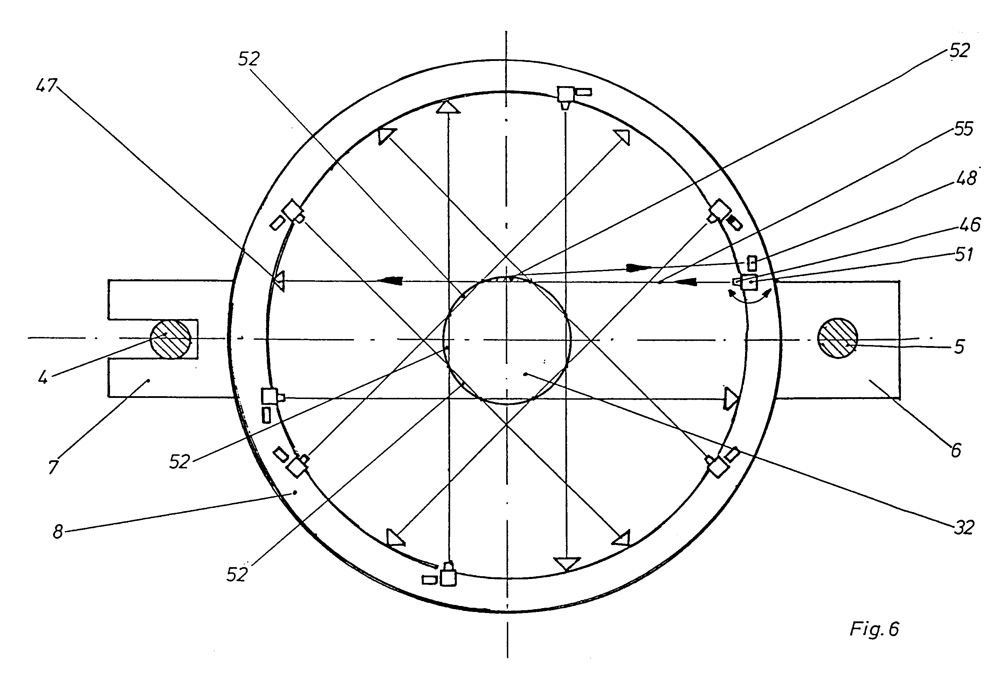

Fig. 6 zeigt den Arbeitsring 8 in vergrößertem Maßstab und in Draufsicht. Bei der gezeigten Ausführungsform sind jeweils acht Wasserstrahldüsen 46 mit gegenüberliegenden Wasserfangtrichtern 47 und Sensoren 48 vorgesehen.

Die mit Hochdruck aus den Düsen 46 austretenden Wasserstrahlen 55 schneiden bei seitlicher Verlagerung dieser Düsen in Pfeilrichtung H mit der axialen Bewegung des Arbeitsrings 8 im Gestell 1 der Vorrichtung Schichten vom Spargel als Schalen 52 ab (in Fig. 6 an einer Stelle gestrichelt dargestellt).

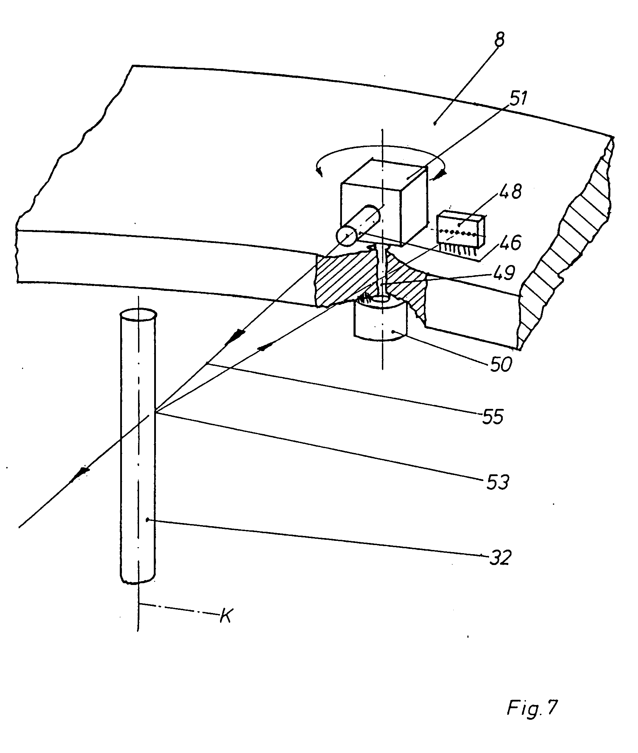

Jede Düse 46 ist mit ihrer Tragerplatte 51 im wesentlichen senkrecht zur Längachsrichtung K nach beiden Seiten begrenzt verschwenkbar, derart, daß jeder Schneidstrahl 55 in den Spargel 32 einerseits hineinschneiden und andererseits auch wieder heraustreten kann (Fig. 7). Die Trägerplatte 51 ist dabei mittels einer Welle 49 durch den Motor 50 drehbar und trägt die Düse 46. Bei der gezeigten Ausführungsform ist der Sensor 48 neben der Trägerplatte 51 am Arbeitsring 8 stationär dargestellt. Dieser vorzugsweise optoelektronische Sensor 48 kann jedoch auch gemeinsam mit der Düse 46 an der Trägerplatte 51 angeordnet sein und mit dieser schwenken. Der Sensor 48 erhält das optische Signal der Kontur 53 des Spargels 32, setzt es in ein elektrisches Signal um und liefert dieses einer Auswerteelektronik. Diese vergleicht die momentane Schalendicke (die Auswerteelektronik kennt ja die Richtung des Wasserstrahls) mit der Solldicke, errechnet einen Verstellwinkel für die Trägerplatte 51 und gibt diesen Winkel als Zeitabschnitt für eine Verstärkerstufe an den Verstellmotor 50. Der Motor 50 wird nun während dieses Zeitabschnitts mit elektrischer Energie beaufschlagt und schwenkt den Wasserstrahl in die gewünschte Richtung.

Da die Winkelunterschiede klein sind, geht jeder Wasserstrahl 55 stets in den jeweils zugehörigen Fangtrichter 47.

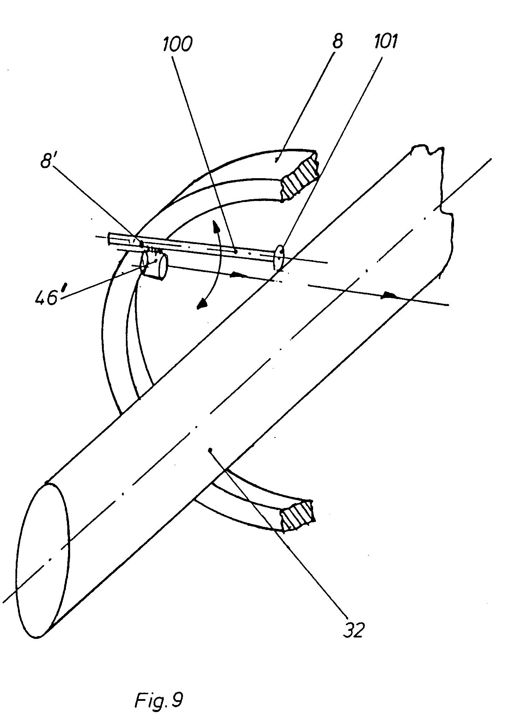

Das Abtasten der Spargelkontur ist auch mechanisch machbar, wobei auf die Ausführungsform nach Fig. 9 zu verweisen ist. Dabei trägt ein am Arbeitsring 8 um eine Achse 8′ drehbar gelagerter Arm 100 an seinem freien Ende eine Rolle 101, die auf dem Spargel 32 unter leichtem Andruck abrollt. Am Arm 100 befestigt ist eine Düse 46′, welche der Schwenkbewegung des Armes 100 folgt. Eine solche Einheit aus Arm 100, Rolle 101 und Düse 46′ kann in gleicher Weise, wie dies aus Fig. 4 ersichtlich ist, am Umfang des Arbeitsringes 8 verteilt angeordnet sein, jedoch auch mechanisch, z.B. über Seilzüge, eine Mehrzahl von Düsen gleichzeitig verschwenken.

Während die Schneidstrahlen, vorzugsweise aus Wasser, jedoch sind auch andere Druckflüssigkeiten möglich, arbeiten, zieht der Motor 9 den Arbeitsring 8 mit den anhängenden Aggregaten und den Rollen 34 und 35, die den Spargel 32 fortwährend gegenüber dem Arbeitsring 8 zentrieren, am Spargel entlang, der weiterhin von den Greiferplatten 21, 22 gehalten ist.

Je nach Zahl und Anordnung der Düsen bildet sich dabei ein polygon-förmig, im vorliegenden Fall achteckig geschälter Spargel. Je mehr Düsen vorhanden sind, desto mehr nähert sich der Spargel in seinem Querschnitt der Kreisform an.

Bei der dargestellten Ausführungsform kommen jeweils Düse 46, Trägerplatte 51, Sensor 48 und Verstellmotor 50 als Einheit mehrfach am Arbeitsring 8 vor, wie auch die jeweils gegenüberliegenden Fangtrichter 47.

Das Ende der Schälstrecke ist erreicht, wenn der Arbeitsring 8 im dargestellten Fall eine Lichtschranke 56 passiert (Fig. 2), die derart einstellbar ist, daß der Spargelkopf selber nicht geschält wird bzw. der Arbeitsring 8 vorher anhält.

Ist die erreichte Schalkontur befriedigend, so ist der Spargel fertig. Die Magnete 38 und 39 heben die Rollen 34 und 35 vom Spargel ab und der Arbeitsring 8 wird anschließend zurückgefahren bis über die Startposition hinaus, also hinter das Ende der Spargelstange, wobei diese stationäre Endposition durch einen nichtgezeigten Endschalter fixiert werden kann. Nunmehr wird die Kopfplatte 57 in nicht gezeigter Weise von einem kleinen Magneten nach unten geklappt, so daß der Spargelkopf absinken kann. Gleichzeitig damit geben die Greiferplatten 21 und 22 oder die Greiferstücke 21′, 22′ den Fuß E frei, so daß der Spargel nach unten aus der Vorrichtung herausfallen und weiterbearbeitet werden kann, beispielsweise durch das Abschneiden des Fußendes, anschließendes Waschen und Verpacken.

Weist der geschälte Spargel jedoch am Ende der Bewegung des Arbeitsrings 8 noch nicht die gewünschte Schalenfreiheit und/oder Form auf, sollen vielmehr noch Schalenreste oder Kanten abgetrennt werden, läßt sich ein Rückhub mit geschwenktem Arbeitsring 8 durchführen. Dabei läßt sich der Arbeitsring 8 (Fig. 1) mittels des Elektromagneten 13 über die Schwenkscheiben 2 und 3 und die Stangen 4 und 5 um einen Winkel α verschwenken, wobei die Betätigungseinrichtung mit dem Seilzug 10, den Umlenkrollen 11, 12 und dem motorischen Antrieb 9 natürlich mitschwenkt. Während der Schwenkbewegung haben die Magnete 38 und 39 die Rollen 34, 35 vom Spargel 32 abgehoben. In der neuen Lage setzen die Rollen wieder auf und übernehmen wieder ihre Zentrierfunktion. Der Arbeitsring 8 wird nun rückwärts gezogen bis zum Startpunkt. Während dieses Rückhubes arbeiten die Düsen 46 erneut und die Schneidstrahlen 55 schälen bzw. schneiden. Am Startpunkt wird angehalten, die Rollen 34, 35 werden abgehoben und einer der Schneidstrahlen kann sich durch Verstellen der Trägerplatte 51 quer durch die Spargelstange schwenken lassen, wodurch ein Abtrennen erfolgt, der Spargel nach unten fällt und das zwischen den Greiferplatten 21, 22 verbleibende Fußende anderweitig entsorgt werden kann. Der Arbeitsring 8 und der Greifer fahren in ihre jeweiligen Endpositionen.

Es versteht sich, daß das Auswerfen des Spargels einschließlich des noch anhaftenden Fußendes auch in der weiter oben eingangs beschriebenen Weise erfolgen kann.

Die in Fig. 6 gezeigten Schneidstrahlen 55 müssen in verschiedenen Ebenen arbeiten, weil sie sich sonst treffen. Parallel gerichtete Strahlen können in derselben Ebene arbeiten. In Fig. 6 liegen die vorhandenen acht Strahlen also in wenigstens vier Ebenen; diese benötigen nur geringe Abstände. Die achteckige Anordnung hat Vorteile. Angenommen alle Strahlen üben die gleiche Strahlkraft auf den Spargel aus und man denkt sich diese Kraft koaxial mit dem Strahl angreifend, so läßt sich erreichen, daß am Spargel Kräfte-und Momentengleichgewicht herrscht, somit keine Reaktionskraft herrscht, die den Spargel

6

32 verschieben wollte. Ferner gibt es auch kein Torsionsmoment, das den Spargel verdrehen könnte. Beide Vorgänge wären mit Beanspruchungen verbunden, die von dem empfindlichen Spargel möglichst ferngehalten werden sollten.

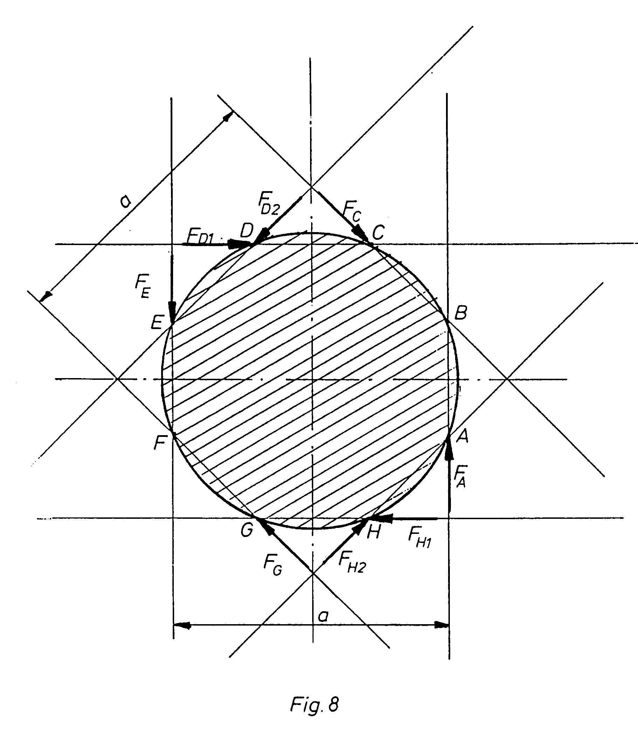

Fig. 8 zeigt die Kräfte am Spargel bei acht Strahlen. Alle Kräfte sind gleich groß im Betrag. Alle Kräfte heben sich gegenseitig auf wie folgt:

$$F_A = F_E$$
$$F_{D1} = F_{H1}$$
$$F_C = F_G$$
$$F_{D2} = F_{H2}$$

Alle Momente bestehen aus gleichen Kräften und gleichen Hebelarmen a und heben sich jeweils auf wie folgt:

Sowohl das Kräftepaar $F_A F_E$ und das Kräftepaar $F_{D1} F_{H1}$ haben jeweils einen entgegengesetzten Drehsinn, als auch das Kräftepaar $F_C F_G$ und das Kräftepaar $F_{D2} F_{H2}$ haben jeweils einen entgegengesetzten Drehsinn und heben sich somit gegenseitig auf. Auch die sich aus den gezeigten, jeweils gleich großen Kräften ergebenden Resultierenden heben sich gegenseitig auf.

Diese günstigen Verhältnisse sind auch bereits bei vier quadratisch angeordneten Wasserstrahlen erreichbar, doch wird ein quadratischer Spargel im allgemeinen nicht gewünscht wegen der erheblichen Größe des Abfalls. Jedoch ergäbe sich bereits bei zweimaliger Hubfahrt und einem Schwenk des Arbeitsrings 8 um 45° = $\alpha$ am Umkehrpunkt ein achteckiger Spargel. Dabei läßt man beim Hinhub runde Stellen der Spargelkontur stehen.

Der Spargel kann auch in senkrechter Lage geschält werden. Dazu ist ein weiterer Greifer erforderlich, der nach Beenden des Schälvorgangs, wenn der Arbeitsring mit den Zentrierrollen hinter das Ende des Spargels gefahren worden ist, von der Seite, also nunmehr horizontal, den fertig geschälten Spargel ergreift und aus dem Schälbereich seitlich herauszieht, so daß der Schälbereich durch die Schwenkscheibe 3 neu geladen werden kann.

Die sensoren 48 können einen gewissen Vorlaufweg vor den Schneidstrahlen 55 haben. Über einen elektronischen Speicher und eine vorlaufwegabhängige Zeitverzögerung gelangt die erforderliche Winkelverstellung der Trägerplatte 51 zum richtigen Zeitpunkt an den Motor 50 (Fig. 7). Um die Sensoren 48 vor (möglichem) Spritzwasser zu schützen, kann zwischen Sensor 48 und Düse 46 eine nicht gezeigte Trennwand installiert werden.

Am Spargel sind lokale Verdickungen, z.B. "Augen" vorhanden. Diese Augen sollten die Sensoren 48 nicht so irritieren, daß sie die Düsen 46 der Verdickung nachfahren lassen. Die Sensor/Motor-Regelung enthält somit zweckmäßig eine Nivelliereinrichtung, die kurze Konturschwankungen elektronisch unterdrückt. Auch insofern ist ein Sensor-Vorlauf günstig.

Zentrierrollen sind beiderseits des Arbeitsrings 8 möglich, aber auch nur jeweils rechts und links des Arbeitsrings 8. Auch ein "Schälhub" nur in eine Richtung nach links oder rechts und ein Leerhub nach links oder rechts sind durchführbar. Es ist bei Verwendung optischer Sensoren für die erforderliche Ausleuchtung der Spargelkontur zu sorgen. Das kann erfolgen durch eine Lichtquelle auf dem jeweiligen Sensor, die an der Spargelkontur entsprechend reflektiert wird, oder durch eine Lichtquelle, die anderweitig in der Vorrichtung angeordnet sein kann.

Die Verstellbarkeit der Düsen wird eingesetzt, um zu Beginn des Schälvorgangs radial entsprechend der gewünschten Schalendicke in den Spargel einzuschneiden (anschließend erfolgt der Schälvorgang) und um am Ende des Schälvorgangs radial aus dem Spargel hinauszuschneiden. Dadurch ist völliges Lösen der Schale gewährleistet. Anschließend kann zum sicheren Entfernen der Schalen eine Wasserdusche geringen Druckes auf den Spargel gerichtet werden. Die Schalen fallen nach unten in einen Behälter.

Wenn später die Spargelstange nach dem Schälen nach unten fällt, kann sie alsbald auf eine inzwischen eingeschwenkte, schräge, nicht gezeigte Rutsche treffen, die sie weiterleitet.

Alle Antriebsaggregate lassen sich außer elektrisch, auch hydraulisch (Öl, Wasser) oder pneumatisch ausführen. Vorteilhaft sind natürlich Druckwasserantriebe, da Druckwasser in der Maschine bereits vorhanden ist.

Eine nicht gezeigte Reinigungsstation für die Sensoren 48 von Spritzwasser kann hinter dem Ende der Spargelstange 32 installiert sein. Jeder Sensor 48 fährt unter eine ortsfeste Reinigungsstation, z.B. Wischer, wodurch Spritzwasser entfernt wird. Dieser Vorgang kann einmal pro Spargelstange durchgeführt werden.

Im folgenden werden zwei Varianten einer Verfahrenssteuerung mittels einer elektronischen Regeleinheit, vorzugsweise unter Verwendung eines Mikroprozessors$\mu$P gezeigt, wobei die Variante gemäß Fall a einen Rückhub des Arbeitsrings 8 ohne Schälen betrifft, während die Variante gemäß Fall b einen Rückhub desselben mit einem Schälen erläutert. Der Buchstabe A bezeichnet damit jeweils einen Ausgang aus dem Mikroprozessor, während der Buchstabe E einen Eingang darstellt; Eingänge betreffen dabei Signale von Sensoren, Ausgänge Signale an Stellglieder. Die einzelnen Vorgänge ergeben sich dabei in zeitlicher Abfolge fortlaufend von $E_1$ bzw. $A_1$ bis $E_7$ bzw. $A_{20}$ je nach Verwendung der beiden Varianten, jeweils aufgeführt auf den folgenden vier Seiten:

(Hierbei ist zu beachten, daß der Hinhub in der Zeit $t_1$ bis $t_2$ auch ohne die vorherigen Ausgänge $A_7$ und $A_8$ durchgeführt werden kann, derart, daß ein Schälen bzw. Schneiden unterbleibt. Es versteht sich, daß hierbei die Möglichkeit des Falles a entfällt, da natürlich eine Durchführung des Rückhubs ohne Schälen sinnlos wäre. Dabei ist auch eine Variante dahingehend möglich, daß nicht nur sowohl beim Hin- als auch beim Rückhub geschalt wird, sondern auch bei dieser Gelegenheit zwei verschiedene Spargel geschält werden, derart, daß nach dem schälenden Hinhub eine erste Spargelstange als fertiggestellt nach unten abgegeben wird, woraufhin vom Greifer eine zweite Spargelstange eingezogen wird und erst dann der schälende Rückhub erfolgt.)

$E_1$ Spargel(fuß) an Ladeposition vorhanden (entspricht bestimmter Stelle auf Taktlineal 74) → Sensor 60

$t_0$

Zeit t

$A_1$ Verfahre die Greiferstange 17 in Ladeposition → Motor 61 der Greiferstange

$A_2$ Betätige Magnet 26 (Greifen des Spargels) → Magnet 26 des Greifers

$A_3$ Verfahre, bis $E_2$ → Motor 61 der Greiferstange

$E_2$ Spargelkopf in Maschine → Sensor 33

$E_3$ Meldet Stellung (abhängig von Spargellänge) der Greiferstange → Sensor 75 auf Greiferstange zum Taktlineal 74

μP

$A_4$ Verfahre Arbeitsring 8 in Startposition (abhängig von Spargellänge) → Motor 9

$A_5$ Schwenke die Zentrierrollen 34 + 35 bis auf Spargel 32 → Magnete 38 + 39

$E_4$ Meldet Kontur des Spargels → Sensor 48

$A_6$ Schwenke Trägerplatte 51, so daß zukünftiger Wasserstrahl noch außerhalb der Spargelkontur → Motor 50

$A_7$ Wasserstrahl anstellen → Düse 46

$A_8$ Schwenke Trägerplatte 51, so daß Wasserstrahl radial in Spargel eindringt bis zum vorher eingestellten Sollwert der Schältiefe → Motor 50

$t_1$

Hinhub

$t_1$

Zeit t

$t_2$

$\mu P$

$A_9$ Verfahre Richtung Spargelkopf (Vorhub)

Motor 9

$E_5$ Arbeitsring 8 angekommen

Sensor 56

$A_{10}$ anhalten

Motor 9

$A_{11}$ Wasserstrahl abstellen

Düse 46

$A_{12}$ entstromen, dadurch schwenken

die Federn 42 + 43 die Rollen
34 + 35 vom Spargel ab

Magnete 38 +
39

Fall a

ab $t_2$ Rückhub <u>ohne</u> Schälen

$t_2$

Zeit t

| | |
|---|---|
| $A_{12}$ Verfahre Richtung Spargelfuß (Rückhub) | Motor 9 |
| $A_{13}$ Halte in Startposition | Motor 9 |
| $A_{14}$ Einen Wasserstrahl anstellen | eine Düse 46 |
| $A_{15}$ Schwenke die Trägerplatte 51 mit | ein Motor 50 |
| dieser Düse 46 quer durch Spargel → Spargel abgeschnitten und fällt nach unten | |
| $A_{16}$ Magnet schwenkt Kopfplatte 57 nach unten | Magnet |
| $A_{17}$ Wasserstrahl abstellen | Düse 46 |
| $A_{18}$ Verfahre Arbeitsring 8 Richtung Spargelfuß | Motor 9 |
| $E_6$ Arbeitsring 8 angekommen (Home Position 1 ist gleich für alle Spargellängen + liegt über den Spargelfuß hinaus.) | Home Position 1 Sensor (Schalter) |
| $A_{19}$ anhalten | Motor 9 |
| $A_{20}$ Verfahre Greiferstange 17 in Richtung Home Position 2 | Motor 61 |
| $E_7$ Greiferstange 17 angekommen | Sensor am Taktlineal |
| $A_{21}$ anhalten | Motor 61 |

µP

$t_3$

Fall b

ab $t_2$ Rückhub mit Schälen

$t_2$

Zeit t

| µP | | |
|---|---|---|
| $A_{13}$ Schwenke Ringe 2 + 3 um erforderlichen Winkel $\alpha$ | → | Magnet 13 |
| $A_{14}$ Schwenke die Zentrierrollen 34 + 35 bis auf den Spargel | → | Magnete 38 + 39 |
| $E_6$ Melden Kontur des Spargels | ← | Sensor 48 |
| $A_{15}$ Schwenke Trägerplatte 51, so daß zukünftiger Wasserstrahl noch außerhalb des Spargels | → | Motor 50 |
| $A_{16}$ Wasserstrahl anstellen | → | Düse 46 |
| $A_{17}$ Schwenke Trägerplatte 51, so daß Wasserstrahl radial in Spargel eindringt bis zum vorher eingestellten Sollwert der Schältiefe | → | Motor 50 |
| $A_{18}$ Verfahre Richtung Spargelfuß (Rückhub) | → | Motor 9 |
| $A_{19}$ Halte in Startposition | → | Motor 9 |
| $A_{20}$ Bis auf eine Düse alle abstellen | → | Düse 46 |

Fortsetzung mit $A_{15}$ von Fall a

Es ist darauf hinzuweisen, daß dort, wo eine Betätigung über Seilzüge dargestellt worden ist, natürlich auch Zahnriemen Verwendung finden können, wie auch Verstellspindeln oder dergleichen.

Zur Funktion der Regeleinrichtung wird auf die Verwendung von Sollwerten und Istwerten aufmerksam gemacht. Als Sollwert ist eine gewählte Schalendicke zu verstehen den Istwert stellt die jeweils gemessene Schalendicke dar. In der erläuterten Weise wird die Schalendicke mittels optischer Sensoren gemessen, welche die Spargelkontur während des axialen Verfahrens des Arbeitsrings 8 optisch abtasten, das erhaltene optische Signal in ein elektrisches umwandeln und dieses der Regeleinrichtung eben als Istwert zuführen.

Die Regeleinrichtung errechnet die Abweichung und gibt Befehl, den jeweiligen Motor 50 zur Verstellung der jeweiligen Düse 46 für eine ganz bestimmte Zeit laufen zu lassen.

Der Ort der optischen Abtastung kann bei derselben Achskoordinate wie der Ort des Schneidens liegen, er kann jedoch, in Axial- und Fahrtrichtung gesehen, vor dem Ort des Schneidens liegen. Kurze Verdickungen der Kontur, z.B. Augen, können dabei von einem vorauseilenden Sensor beizeiten vor dem Schneiden an die Regeleinrichtung gemeldet werden. Der Regeleinrichtung wird einprogrammiert, diese kurze Verdikkung zu unterdrücken und dem Motor an dieser Stelle keinen Schwenkbefehl zu erteilen. Ferner kann die Regeleinrichtung ein Memory enthalten, das sich die Koordinate des jeweiligen Auges solange merkt, bis der dazugehörige Schneidstrahl vorbeigefahren ist, wobei eine dauernde Rückmeldung der Schneidstrahlkoordinate an die Regeleinrichtung erfolgt.

Es ist zu ergänzen, daß die Rückstellung der vom Elektromagneten 13 um den Winkel α verstellten Schwenkscheiben 2 und 3 ebenfalls mittels des Elektromagneten 13 erfolgt. Es ist jedoch auch eine einfache mechanische Rückstellung machbar, z.B. mittels einer Rückstellfeder.

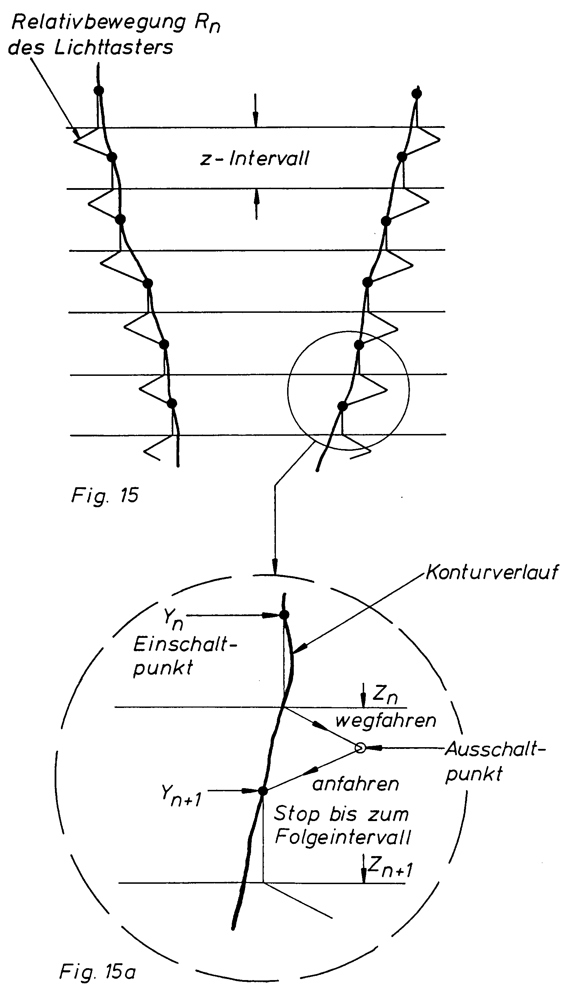

Im folgenden wird anhand der Fig. 15 bis 17 ein besonders bevorzugtes Verfahren zum Betrieb einer rechnergesteuerten Vorrichtung zur optischen Erfassung der Kontur des zu schälenden Gegenstandes, insbesondere Spargels, und zur entsprechenden Auslenkung der Schneidstrahlen erläutert. Vorher soll jedoch noch bemerkt werden, daß man heute an sich zur optischen Konturerfassung zwecks eines nachfolgenden Aussteuerns des Schneidstrahles einer Spargelschäleinrichtung am einfachsten und dem heutigen technologischen Standard entsprechend eine CCD-Zeilenkamera verwenden würde, doch verbietet sich dies normalerweise deshalb, weil dieselbe mit der zugehörigen elektronischen Auswertung noch zu teuer käme, zumal die Konturerfassung gleichzeitig in zwei Ebenen erfolgen soll. Selbstverständlich sind Umstände denkbar, die es ratsam erscheinen lassen, die genannte Lösung praktisch zu verwenden.

Hier soll jedoch ein einfacheres und preiswerteres Verfahren erläutert werden. Dazu sind gemäß Fig. 14 vier Lichttaster in Form optischer Reflexköpfe R1, R2, R3 und R4 derart um das zu erfassende bzw. abzutastende Objekt, insbesondere einen Spargel angeordnet, daß sie einander paarweise gegenüberliegen und ihre Grundrichtungen aufeinander senkrecht stehen. Die Entfernung zum Spargelrand liegt dabei innerhalb des Erfassungsbereichs der Lichttaster bzw. Reflexköpfe, der etwa 50 bis 60 mm beträgt. Jeder Lichttaster ist mit der Achse einer Motor-Getriebeeinheit M1, M2, M3 und M4 verbunden, die ein Schwenken um die Grundrichtung innerhalb eines angemessenen Winkelbereichs gestattet.

Die Lichttaster bzw. Reflexköpfe R1 bis R4 und die Düsen 46 sind nicht in derselben Ebene angeordnet, sondern um eine ausreichende Distanz in Längsrichtung des zu schälenden Gegenstands gegeneinander versetzt und durch ein nicht gezeigtes Blech mit einer zentralen Öffnung für den durchlaufenden Spargel voneinander getrennt. Damit sind die Reflexköpfe RI bis R4 beim Betrieb weitestgehend vor Verschmutzung durch Wasser oder Schalenteile geschützt.

Die Lichtsender der Reflexköpfe R1 bis R4 sind jeweils mit S, die Lichtempfänger mit E bezeichnet.

Jeder Reflexkopf R1 bis R4 liefert ein zweiwertiges bzw. binäres Ausgangssignal in Abhängigkeit von der vom abgetasteten Gegenstand reflektierten Lichtintensität. Daraus resultiert ein spontaner Signalwechsel, sobald die optisch gebündelten Sende- und Empfangsstrahlen eines Reflexkopfs einen Gegenstand berühren. Die Reflexköpfe R1 bis R4 werden im folgenden der Einfachheit halber nur noch Taster genannt. Ein- und Ausschaltpunkt des jeweiligen Tasters sind nicht identisch, sondern liegen bei unterschiedlichen Lichtintensitäten und damit bei unterschiedlichen Entfernungen zum Objektrand, wie Fig. 15 zeigt. Damit lassen sich die Konturen bzw. Spargelradien wie folgt erfassen:

Jeder der vier Taster R1 bis R4 wird mit einem Schrittantrieb periodisch bis zum Einschaltpunkt auf den Spargelrand zubewegt und anschließend wieder bis zum Ausschaltpunkt wegbewegt. Das entstehende Sensorsignal dient zum Umschalten der Antriebsrichtung des Tasters mittels der zugehörigen Motor-Getriebeeinheit. Die gesamte, in Fig. 14 lediglich angedeutete Abtastvorrichtung wird dabei gleichförmig über die Spargellänge senkrecht zur Zeichenebene verfahren, bzw. wird der Spargel im Falle einer stationären Abtastvorrichtung gleichmäßig hindurchgezogen, und zwar in der senkrecht zur Zeichenebene liegenden z-Richtung.

Dabei entsteht eine zickzackförmige Relativbewegung der abtastenden Sensoren über die Gegenstandslänge gemäß Fig. 15 und 15a. Die den Schrittantrieben (Motor-Getriebeeinheiten M1 bis M4) zugeführten Taktimpulse werden in je einem Vorwärts-Rückwärts-Zähler derart verwaltet, daß der Zählerstand stets ein Maß für die momentane Auslenkung des jeweiligen Tasters R1 bis R4 darstellt. Da beim Erreichen des Einschaltpunktes der abtastende Lichtstrahl gerade den Spargelrand berührt, wird der dabei anstehende Zählerinhalt dem Speicher eines Steuerrechners übergeben.

Um eine einfache Zuordnung der gespeicherten Werte zum Längsvorschub des Spargels in z-Richtung zu erhalten und für alle vier Kanäle dieselbe Zahl von Abtastpunkten zu erzielen, wird die z-Richtung in Intervalle gleicher Länge unterteilt, wie Fig. 15 zeigt. Dabei wird der Taster nach Erreichen des Einschaltpunktes kurz in seiner momentanen Position gehalten und erst mit Beginn des folgenden Abtastintervalls wieder nach außen verfahren. Somit werden über die gesamte Spargellänge pro Längsintervall vier Werte zur Beschreibung des Konturverlaufes im Speicher abgelegt.

Die Bearbeitung erfolgt schließlich in einer dem Messen entgegengesetzten Vorschubrichtung. Aus den daher in umbekehrter Reihenfolge dem Speicher entnommenen Konturwerten wird die Auslenkung des

EP 0 324 155 B1

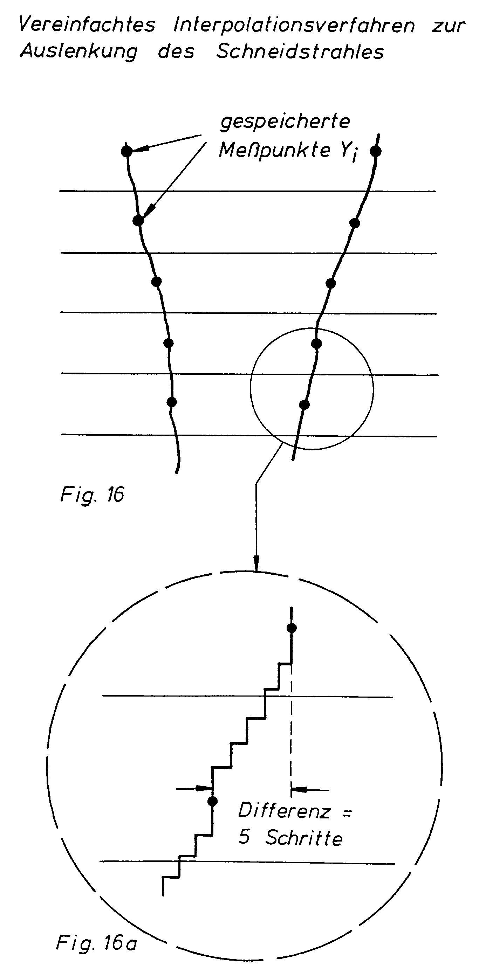

Schneidstrahles ermittelt. Dabei bildet das Rechnerprogramm stets die Differenzen der Meßwerte aufeinanderfolgender Intervalle und steuert den Schneidstrahl nach einem vereinfachten Interpolationsverfahren gemäß den Fig. 16 und 16a. Die Schalendicke ergibt sich aus einem wählbaren Versatz der dem Schrittantrieb aufgegebenen Koordinaten gegen die gespeicherten Konturwerte. Dabei ist es denkbar, kurze Verdickungen (z.B. Augen im Falle eines Spargels) programmgesteuert einzuebnen bzw. die Schalenstärke in einer Richtung zu- oder abnehmen zu lassen.

Der bereits eingangs erwähnte axiale Versatz zwischen der Ebene der Taster und der Ebene der Düsen wird in der Bearbeitungsphase vom Rechnerprogramm berücksichtigt.

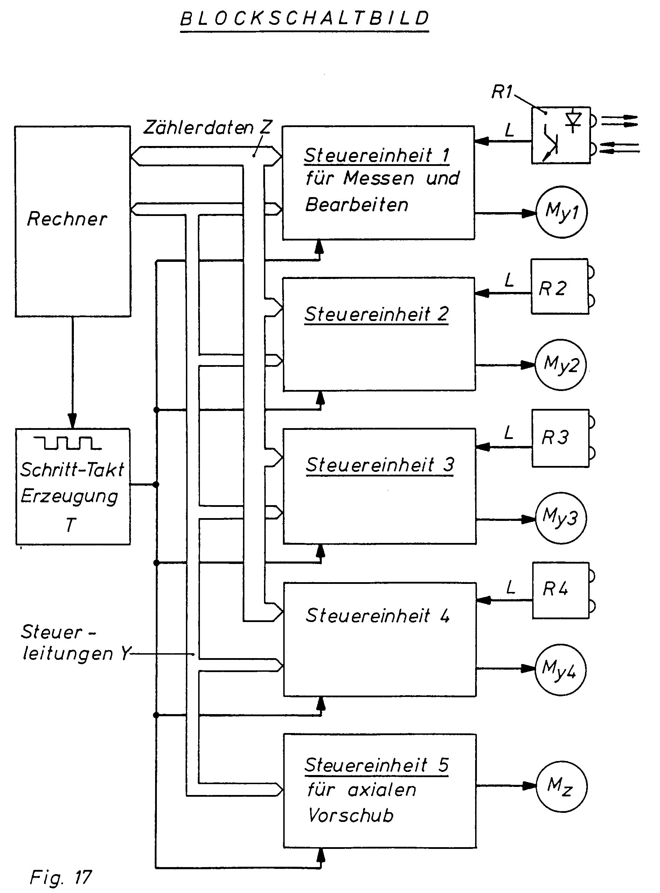

Bild 17 schließlich zeigt ein grobes Blockschaltbild für die erforderlichen Meß- und Bearbeitungs-(bzw. Schneid-)Steuereinheiten 1, 2, 3 und 4 und die Steuereinheit 5 für den axialen Vorschub bzw. Vorschub in z-Richtung. Der Rechner ist über einen Datenbus Z mit Impulszählern der Steuereinheiten 1 bis 4 verbunden, um Zählerstände zu übernehmen oder Voreinstellwerte an die Zähler zu übergeben. Über Steuer- und Meldeleitungen Y erfolgt der Austausch von Steuer- und Zustandssignalen zwischen dem Rechner und den Steuereinheiten 1 bis 5, z.B. für den Intervallstart, für die Drehrichtung der Antriebe oder die Übernahme einer Zähler-Voreinstellung. Ein gemeinsamer Taktgenerator T erzeugt die Schritt-Takte für die Antriebe mit unterschiedlichen Frequenzen für das Messen einerseits und für die Bearbeitung andererseits. Mit L sind in Fig. 17 jeweils die Leitungen bezeichnet, über welche die Abtastwerte der Taster R1 bis R4 den Steuereinheiten 1 bis 4 zugeleitet werden. $M_z$ bezeichnet die Motor-Getriebeeinheit, die in Abhängigkeit von den Signalen der Steuereinheit 5 für den axialen Vorschub sorgt. $M_{y1}$ bis $M_{y4}$ bezeichnen die Motor-Getriebeeinheiten für die Verarbeitung der Steuersignale der Steuereinheiten 1 bis 4 zwecks Zustellung der Düsen 46 und damit Schneidstrahlen 55.

Es versteht sich, daß die Reflexköpfe R1 bis R4 mit ihren Antrieben M1 bis M4 beispielsweise auf der einen Seite des Arbeitsrings 8 der weiter oben beschriebenen Vorrichtung angeordnet sein können, während sich die Düsen 46 mit den zugehörigen Motor-Getriebeeinrichtungen $M_{y1}$ bis $M_{y4}$ auf der anderen Seite dieses Arbeitsrings 8 befinden können, unabhängig davon, ob im Einzelfalle der Spargel stationär und der Arbeitsring 8 beweglich oder der Arbeitsring 8 stationär und der Spargel beweglich angeordnet sind.

Was die allgemein, außer den genannten Gemüsen, erwähnten Gegenstände angeht, so sollen hier lediglich Bleistifte, Stäbe, Röhren erwähnt werden, wobei die beiden letztgenannten Gegenstände nicht nur aus Holz, wie die Bleistifte, sondern auch beispielsweise aus Kunststoff oder dergleichen bestehen können. Es versteht sich, daß dabei mit der erfindungsgemäßen Vorrichtung jeweils gewünschte Abfasungen oder dergleichen bewirkt werden können, ggf. auch abweichend von einer vorgegebenen geradlinigen Kontur nach Maßgabe eines speziellen, in die Regeleinrichtung eingespeicherten Programms. Dabei sind auch schraubenförmige Verläufe der Schnittflächen mit ggf. unterschiedlicher Steigung und stufig oder stufenlos wechselnder Schalentiefe denkbar und möglich.

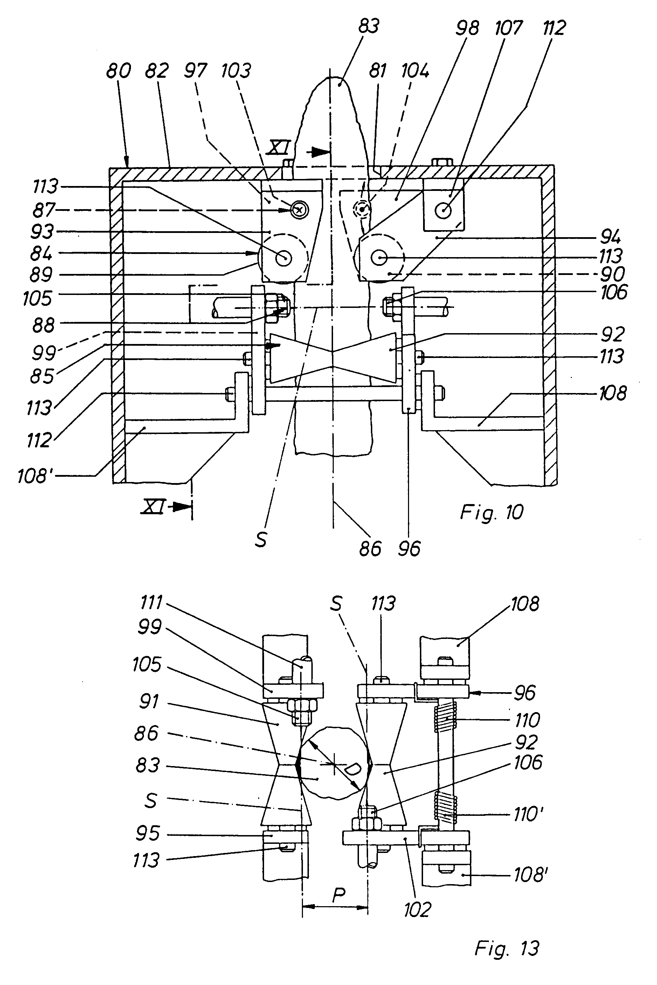

Die Figuren 10 bis 13 zeigen eine weitere, vereinfachte und sozusagen für den Hausgebrauch bestimmte Ausführungsform einer Vorrichtung zur Ausführung des erfindungsgemäßen Verfahrens, insbesondere zum Spargelschälen.

Diese Vorrichtung besitzt einen Behälter 80 mit einer im wesentlichen mittigen Öffnung 81 an seiner Oberseite 82 zum Einführen eines Spargels 83 in seiner Längsrichtung im wesentlichen senkrecht nach unten in den Behälter 80 längs dessen Längsachse 86. In möglichst kurzem Abstand sind unterhalb der Öffnung zwei Führungsrollenpaare 84 und 85 untereinander längs der Längsachse 86 in Abstand voneinander und um 90° zueinander versetzt angeordnet, die den Spargel 83 zwischen sich aufnehmen. Ferner sind den Führungsrollenpaaren 84, 85 jeweils Düsenpaare 87 und 88 zugeordnet. Die Rollen 89, 90, 91 und 92 der Führungsrollenpaare 84 und 85 sind jeweils in gabelförmigen Trägern 93, 94, 95, 96 im Behälter 80 gelagert. An jeweils einem Steg 97, 98, 99, 102 dieser Träger ist eine Düse 103, 104, 105 und 106 angeordnet. Dabei weisen die an den entsprechenden Stegen 97, 98 bzw. 99, 102 der beiden Träger 93, 94 bzw. 95, 96 eines Rollenpaares 84, 85 angeordneten beiden Düsen 103, 104 bzw. 105, 106 eine einander entgegengesetzte Strahlrichtung auf.

Dabei sind die dem einen Führungsrollenpaar 84 zugeordneten Düsen 103, 104 den dem anderen Führungsrollenpaar 85 zugeordneten Düsen 105, 106 derart entgegengesetzt angeordnet, daß Gleichgewicht bezüglich der von den Düsen gelieferten Schneidstrahlen ausgeübten Kräfte und Momente herrscht. Es handelt sich hier um eine Analogie zu der in den Fig. 6 bis 8 erläuterten Vorrichtung mit acht Düsen bzw. Schneidstrahlen.

Vorteilhaft ist der gabelförmige Träger 94, 96 jeweils einer Rolle 90, 92 jedes Führungsrollenpaares 84, 85 an einem am Behälter 80 befestigten Support 107, 108, 108′ gegen Federdruck (Federn 109 und 109′ bzw. 110, 110′) auf den Spargel 83 zu und von diesem weg schwenkbar gelagert. Dies erlaubt die Anpassung der Vorrichtung an unterschiedliche Spargeldurchmesser.

14

Die Rollen 89, 90, 91, 92 der Führungsrollenpaare 84, 85 weisen vorteilhaft konkav ausgebildete Oberflächen auf, zweckmäßig in Doppelkegelstumpfform. Dies begünstigt die Führung des Spargels 83 im Sinne einer Zentrierung.

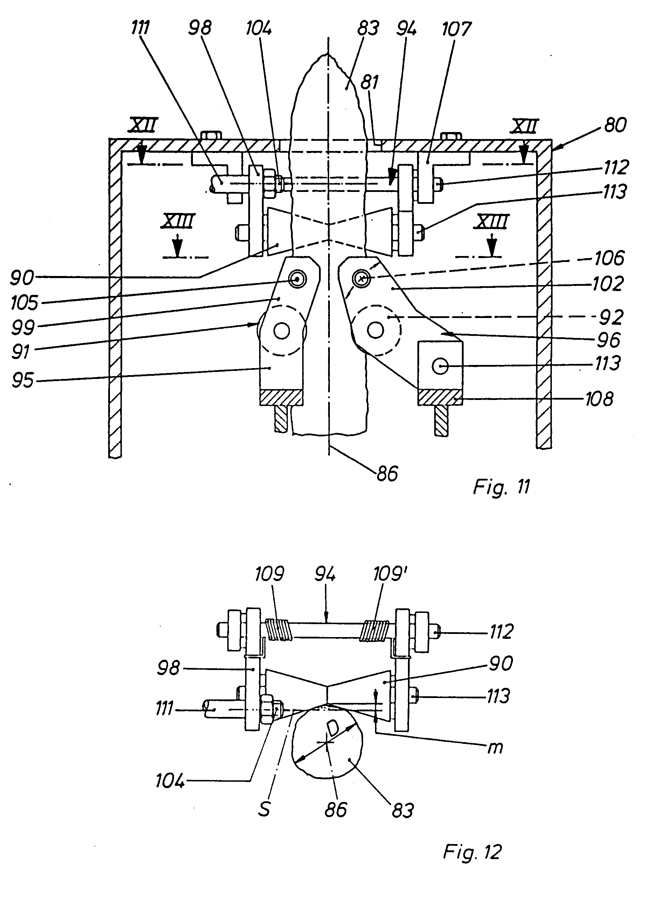

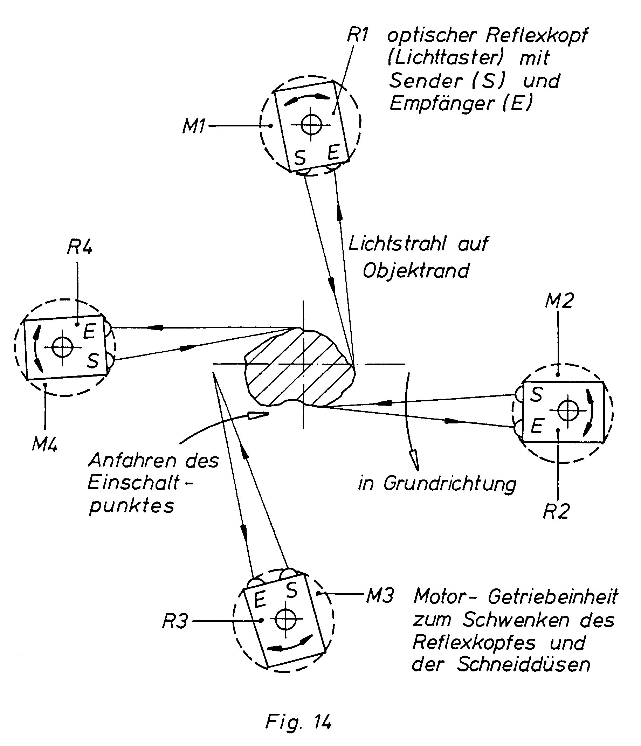

Wie die Fig. 12 und 13 zeigen, besteht ein kleiner Abstand m zwischen der äußeren, in eine Rolle eingebetteten Kontur des Spargels 83 und dem Schneidstrahl S, wie er beispielsweise aus der Düse 104 austritt, die der Rolle 90 zugeordnet ist. Der Abstand m entspricht dabei der Schalendicke. Im übrigen herrscht folgende Beziehung: Der Abstand P zwischen zwei Schneidstrahlen S ist gleich Spargeldurchmesser D minus 2m.

Daraus folgt gleichzeitig, daß der Abstand P stets kleiner sein muß als der Abstand zwischen den axialen Mitten der beiden Rollen eines Rollenpaars.

Die Funktion ist wie folgt:

Die Vorrichtung wird dadurch in Betrieb gesetzt, daß die Schneidstrahlen erzeugt werden, nämlich dadurch, daß über entsprechende Schlauchleitungen, wie sie beispielsweise bei 111 in Fig. 12 gezeigt ist, die Druckflüssigkeit, zweckmäßig Druckwasser, zugeführt wird. Sodann wird ein Spargel 83 an seiner Spitze erfaßt und durch die Öffnung 81 nach unten in den Behälter 80 eingeführt, wobei er sich langs den stationären Führungsrollen 89 und 91 bewegt und dabei von den um Achsen 112 verschwenkbaren Führungsrollen 90 und 92 leicht angedrückt wird, so daß durch die vier vorhandenen Schneidstrahlen vier Oberflächenabschnitte geschnitten werden können. Vor dem Herausziehen des Spargels wird dieser um 45° gedreht, so daß beim Herausziehen vier weitere, um 45° versetzte Oberflächenabschnitte geschnitten werden können. Die Oberflächenabschnitte bzw. Schalen können sodann abfallen, beispielsweise in den Behälter 80 hinein, der zu diesem Zwecke unten offen ist, oder sie werden von Hand entfernt, soweit sie noch unterhalb des Kopfbereiches am Spargel haften sollten. Es versteht sich, daß der Spargelkopf selber nicht beschnitten wird, zumal er ja auch als sozusagen Griffende außerhalb des Behälters 80 verbleibt.

Nach diesen Arbeitsgängen ergibt sich ein etwa achteckiger Querschnitt des Spargels.

Es versteht sich, daß in Fig. 12 die aus Fig. 10 zu entnehmende Rolle 89 mit ihrer Lagerung nur deshalb entfallen ist, weil die zur Darstellung gewählten Schnittverhältnisse dies erfordern; natürlich ist sie tatsächlich vorhanden, wie Fig. 10 zeigt. Im übrigen sind natürlich sämtliche Rollen mittels Achsen 113 drehbar gelagert.

Bei der Durchführung des erfindungsgemäßen Verfahrens ist die Verwendung einer Druckflüssigkeit, z.B. Wasser, mit einem Druck von mindestens 150 bar zweckmäßig. Geringere Drücke sind zwar möglich, führen jedoch zumeist nicht zu völlig glatten Schnitten, d.h. es müssen Ausfaserungen der Schnittränder in Kauf genommen werden. Ferner hat sich herausgestellt, daß in den meisten Fällen der Druck nicht höher zu sein braucht als 500 bar. Es versteht sich, daß der im Einzelfall optimale Druck vom jeweiligen Material des zu schneidenden bzw. zu schälenden Gegenstands abhängt und jeweils zu ermitteln ist. Auch Drücke von oberhalb 500 bar können gegebenenfalls angebracht sein.

Bei einer Erprobung des erfindungsgemäßen Verfahrens wurde Wasser mit einem Druck von 250 bar für das Schälen von Spargel verwendet, wobei sich gute Resultate ergaben.

**Patentansprüche**

1. Verfahren zum simultanen und/oder konsekutiven Entfernen von Oberflächenschichten im wesentlichen rotationssymmetrischer Gegenstände (32), insbesondere von Gemüsesorten wie Spargel, Schwarzwurzeln, Möhren und dergleichen, wobei das Entfernen mittels mindestens eines am Umfang des Gegenstandes (32) angreifenden Strahls aus einer Druckflüssigkeit wie Wasser oder dergleichen vorgenommen wird, und wobei Strahl und Gegenstand relativ zueinander bewegt werden, dadurch gekennzeichnet, daß der bzw. die Strahl(en) als Schneidstrahl(en) (55) im wesentlichen quer zur Axialrichtung des Gegenstands (32) angeordnet und senkrecht zu derselben in Anpassung an die Kontur des Gegenstandes und zur Einstellung der gewünschten Schichtdicke (52) verschwenkt wird bzw. werden.

2. Verfahren nach Anspruch 1, dadurch gekennzeichnet, daß der Schneidestrahl (55) in Axialrichtung und in Umfangsrichtung des Gegenstands bewegt wird.

3. Vorrichtung zur Ausführung des Verfahrens nach den Ansprüchen 1 oder 2, insbesondere zum Spargelschälen, gekennzeichnet durch ein eine Längsachsrichtung aufweisendes Gestell (1), in das der jeweilige Spargel (32) in im wesentlichen horizontaler Lage mittels eines in Längsachsrichtung (K) am Gestell (1) geführten Greifers (17, 21, 22) in Achsrichtung einbringbar und arretierbar ist, und durch einen Arbeitsring (8), der so ausgebildet ist, daß er den eingebrachten und arretierten Spargel umgibt, ebenfalls in Längsachsrichtung (K) relativ zum Gestell (1) geführt ist und an seinem Umfang eine Düse oder verteilt mehrere Düsen (46, 51) für die Ausbildung des Schneidstrahls bzw. der Schneidestrahlen (55) aufweist, derart, daß bei einem Verschieben des Arbeitsrings (8) längs seiner Führung (4, 5, 6, 7) der Umfang des Spargels (32) bestreichbar ist, wobei jede Düse (46, 51) im wesentlichen senkrecht zur Längsachrichtung (K) nach beiden Seiten begrenzt verschwenkbar ist, derart, daß jeder Schneidstrahl (55) in den Spargel (32) einerseits hineinschneiden und andererseits aus diesem wieder herausschneiden kann.

4. Vorrichtung nach Anspruch 3, dadurch gekennzeichnet, daß der Greifer aus einer Nürnberger Schere (19, 20, 27, 28) mit Greiferplatten bzw. -schalen (21, 22) an ihren schwenkbaren Enden besteht, die einschließlich ihrer Betätigung (25, 26, 29) an einer Stange (17) angeordnet ist, die ihrerseits in einem gestellfesten Lager (18.1, 18.2) koaxial verschiebbar und einstellbar ist.

5. Vorrichtung nach Anspruch 4, dadurch gekennzeichnet, daß die axiale Führung des Arbeitsrings (8) aus zwei Stangen (4, 5) und zwei auf diesen Stangen gelagerten, am Arbeitsring (8) befestigten und mit diesem verschiebbaren Gleitstücken (6, 7) besteht, wobei an mindestens einem der Gleitstücke (6, 7) eine die Verschiebung bewirkende Betätigungseinrichtung (9, 10, 11) angreift, und daß die vorgenannte Anordnung mittels der Enden der Stangen (4, 5) mit zwei in den einander gegenüberliegenden Stirnwänden (1', 1'') des Gestells (1) koaxial drehbar gelagerten Schwenkscheiben (2, 3) fest verbunden und mit diesen im wesentlichen koaxial um den Spargel (32) begrenzt verschwenkbar ist.

6. Vorrichtung nach Anspruch 5, dadurch gekennzeichnet, daß die Betätigungseinrichtung für den Arbeitsring (8) aus einem am Gleitstück (6) angreifenden Seilzug (10) mit Umlenkrollen (11, 12) an den Schwenkscheiben (2, 3) und einem auf einer der Schwenkscheiben (2) angeordneten motorischen Antrieb (9) besteht.

7. Vorrichtung nach einem der Ansprüche 3 bis 4, dadurch gekennzeichnet, daß bei Vorhandensein mehrerer Düsen (46, 51) diese derart am Arbeitsring (8) angeordnet sind, daß sich die Reaktionskräfte und -momente der von ihnen abgegebenen Schneidstrahlen gegenseitig praktisch neutralisieren und im wesentlichen keine Resultierende bezüglich der Führung (4, 5, 6, 7) des Arbeitsrings (8) verbleibt.

8. Vorrichtung nach Anspruch 3 oder 7, dadurch gekennzeichnet, daß jeder Düse (46, 51) ein elektromagnetischer, vorzugsweise mit Licht arbeitender Sensor (48) zur Abtastung der Kontur des Spargels und zur Überwachung der Schalendicke während des Schälvorgangs zugeordnet ist.

9. Vorrichtung nach Anspruch 3, 7 oder 8, dadurch gekennzeichnet, daß jeder Düse am Arbeitsring (8) gegenüberliegend ein Trichter (47) zum Auffangen des Schneidstrahls (55) angeordnet ist.

10. Vorrichtung nach Anspruch 3, 7 oder 8, dadurch gekennzeichnet, daß in jeweils einer Ebene quer zur Achsrichtung zwei einander entgegengesetzt austretende Schneidstrahlen (55) in einem solchen Abstand voneinander am Arbeitsring (8) angeordnet sind, daß jeder zu schälende Spargel zwischen ihnen einfaßbar ist, wobei der Schwenkbereich jedes Schneidstrahls die Kontur des Spargels kreuzt.

11. Vorrichtung nach Anspruch 10, dadurch gekennzeichnet, daß mindestens zwei Ebenen mit jeweils zwei Schneidstrahlen (55) in Axialabstand voneinander vorgesehen sind.

12. Vorrichtung nach Anspruch 11, dadurch gekennzeichnet, daß vier Ebenen mit insgesamt acht Schneidstrahlen (55) vorgesehen sind.

13. Vorrichtung nach einem der Ansprüche 3 bis 12, dadurch gekennzeichnet, daß am Arbeitsring (8) mindestens eine in und außer Anlage am jeweiligen Spargel (32) schwenkbare, axial in Abstand angeordnete Zentrierrolle (34, 35) vorgesehen ist.

14. Vorrichtung nach Anspruch 4, dadurch gekennzeichnet, daß die den Greifer tragende Stange (17) mit einem gestellfesten Taktlineal (74) zusammenarbeitet, mittels dessen die Stellung der Stange (17) in Abhängigkeit von der Spargellänge über eine Lichtschranke (75) abtastbar und in eine Regeleinheit für die Regelung der einzelnen Arbeitsschritte einspeisbar ist.

**15.** Vorrichtung nach einem der Ansprüche 3 bis 14, dadurch gekennzeichnet, daß der Funktionszyklus folgende Schritte aufweist, aufgetragen über die Zeit, wobei eine elektronische Regeleinheit vorzugsweise unter Verwendung eines Mikroprozessors µP die Verfahrenssteuerung durchführt, A einen Ausgang aus dem µP und E einen Eingang in den µP darstellt, und wobei Eingänge Signale von Sensoren und Ausgänge Signale an Stellglieder bedeuten:

$t_0$

Zeit t

µP

$E_1$ Spargel(fuß) an Ladeposition vorhanden (entspricht bestimmter Stelle auf Taktlineal 74) — Sensor 60

$A_1$ Verfahre die Greiferstange 17 in Ladeposition — Motor 61 der Greiferstange

$A_2$ Betätige Magnet 26 (Greifen des Spargels) — Magnet 26 des Greifers

$A_3$ Verfahre, bis $E_2$ — Motor 61 der Greiferstange

$E_2$ Spargelkopf in Maschine — Sensor 33

$E_3$ Meldet Stellung (abhängig von Spargellänge) der Greiferstange — Sensor 75 auf Greiferstange zum Taktlineal 74

$A_4$ Verfahre Arbeitsring 8 in Startposition (abhängig von Spargellänge) — Motor 9

$A_5$ Schwenke die Zentrierrollen 34 + 35 bis auf Spargel 32 — Magnete 38 + 39

$E_4$ Meldet Kontur des Spargels — Sensor 48

$A_6$ Schwenke Trägerplatte 51, so daß zukünftiger Wasserstrahl noch außerhalb der Spargelkontur — Motor 50

$A_7$ Wasserstrahl anstellen — Düse 46

$A_8$ Schwenke Trägerplatte 51, so daß Wasserstrahl radial in Spargel eindringt bis zum vorher eingestellten Sollwert der Schältiefe — Motor 50

$t_1$

<u>Hinhub</u>

$t_1$

Zeit t

$\mu P$

$A_9$ Verfahre Richtung Spargelkopf (Vorhub) → Motor 9

$E_5$ Arbeitsring 8 angekommen ← Sensor 56

$A_{10}$ anhalten → Motor 9

$A_{11}$ Wasserstrahl abstellen → Düse 46

$A_{12}$ entstromen, dadurch schwenken

die Federn 42 + 43 die Rollen
34 + 35 vom Spargel ab → Magnete 38 + 39

$t_2$

## Fall a

ab $t_2$  Rückhub ohne Schälen

$t_2$

Zeit t

$A_{12}$ Verfahre Richtung Spargelfuß (Rückhub) → Motor 9

$A_{13}$ Halte in Startposition → Motor 9

$A_{14}$ Einen Wasserstrahl anstellen → eine Düse 46

$A_{15}$ Schwenke die Trägerplatte 51 mit dieser Düse 46 quer durch Spargel → ein Motor 50 Spargel abgeschnitten und fällt nach unten

$A_{16}$ Magnet schwenkt Kopfplatte 57 nach unten → Magnet

µP

$A_{17}$ Wasserstrahl abstellen → Düse 46

$A_{18}$ Verfahre Arbeitsring 8 Richtung Spargelfuß → Motor 9

$E_6$ Arbeitsring 8 angekommen (Home Position 1 ist gleich für alle Spargellängen + liegt über den Spargelfuß hinaus.) → Home Position 1 Sensor (Schalter)

$A_{19}$ anhalten → Motor 9

$A_{20}$ Verfahre Greiferstange 17 in Richtung Home Position 2 → Motor 61

$E_7$ Greiferstange 17 angekommen → Sensor am Taktlineal

$A_{21}$ anhalten → Motor 61

$t_3$

Fall b

a) $t_2$ Rückhub mit Schälen

$t_2$

Zeit t

μP

A$_{13}$ Schwenke Ringe 2 + 3 um erförder- → Magnet 13
lichen Winkel $\alpha$

A$_{14}$ Schwenke die Zentrierrollen 34 + 35 → Magnete 38 + 39
bis auf den Spargel

E$_6$ Melden Kontur des Spargels ← Sensor 48

A$_{15}$ Schwenke Trägerplatte 51, so daß → Motor 50
zukünftiger Wasserstrahl noch
außerhalb des Spargels

A$_{16}$ Wasserstrahl anstellen → Düse 46

A$_{17}$ Schwenke Trägerplatte 51, so daß → Motor 50
Wasserstrahl radial in Spargel
eindringt bis zum vorher eingestellten Sollwert der Schältiefe

A$_{18}$ Verfahre Richtung Spargelfuß → Motor 9
(Rückhub)

A$_{19}$ Halte in Startposition → Motor 9

A$_{20}$ Bis auf eine Düse alle abstellen → Düse 46
Fortsetzung mit A$_{15}$ von Fall a

16. Vorrichtung nach einem oder mehreren der Ansprüche 8 bis 11, dadurch gekennzeichnet, daß zur optischen Erfassung der Konturen im wesentlichen rotationssymmetrischer Gegenstände, insbesondere von Gemüsesorten wie Spargel, Schwarzwurzeln, Möhren und dergleichen, und zum Nachführen eines oder mehrerer Schneidstrahlen zum simultanen und/oder konsekutiven Entfernen von Oberflächenschichten dieser Gegenstände vier jeweils von Motor-Getriebeeinheiten (M1, M2, M3, M4) über einen Winkelbereich schwenkbare und unterschiedliche Ein- und Ausschaltpunkte bei unterschiedlichen Lichtintensitäten aufweisende Lichttaster in Form von Reflexköpfen (R1, R2, R3, R4) paarweise einander gegenüberliegend um den Gegenstand herum in einer ersten Ebene angeordnet sind, deren Grundrichtungen aufeinander im wesentlichen senkrecht stehen, daß in einer gegenüber der ersten Ebene in Längsrichtung des Gegenstandes versetzten zweiten Ebene vier Düseneinheiten jeweils in dieser Längsrichtung neben den vier Lichttasten angeordnet und ebenfalls mit Motor-Getriebeeinheiten ($M_{Y1}$, $M_{Y2}$, $M_{Y3}$, $M_{Y4}$) versehen sind, daß eine weitere Motor-Getriebeeinheit ($M_z$) zur Erzeugung einer Relativbewegung zwischen dem Gegenstand einerseits und den Reflexköpfen und Düseneinheiten

20

andererseits vorgesehen ist, daß außerdem ein Rechner, ein Taktgeber (T) und fünf Steuereinheiten vorgesehen sind, wobei die ersten vier Steuereinheiten über Eingangsleitungen (L) mit den vier Reflexköpfen und sämtliche fünf Steuereinheiten über Ausgangsleitungen mit den Motor-Getriebeeinheiten, die ersten vier Steuereinheiten außerdem einerseits über einen Datenbus (Z) und andererseits über Steuerleitungen (Y) mit dem Rechner und schließlich der Rechner mit dem Taktgeber und der Taktgeber mit sämtlichen Steuereinheiten verbunden sind.

17. Vorrichtung nach Anspruch 16, dadurch gekennzeichnet, daß in einer Meßphase jeder der vier Reflexköpfe (R1, R2, R3, R4) über den Taktgeber schrittweise und periodisch bis zum Einschaltpunkt auf den Spargelrand zubewegt und anschließend wieder bis zum Ausschaltpunkt wegbewegt wird, wobei die Reflexköpfe und der Gegenstand sich gleichmäßig über die Länge des Gegenstands hinweg relativ zueinander bewegen (z-Richtung), derart, daß eine zickzackförmige Relativbewegung der Reflexköpfe über die Gegenstandslänge entsteht, wobei die Zahl der Taktimpulse stets ein Maß für die momentane Auslenkung des Lichtstrahls des jeweiligen Reflexkopfes darstellt, wobei der Zählerstand beim Erreichen des Randes des Gegenstandes und damit des Einschaltpunktes einem Speicher des Steuerrechners übergeben wird, daß die z-Richtung in Intervalle gleicher Länge unterteilt wird, um eine Zuordnung der gespeicherten Werte zum Längevorschub in der z-Richtung zu erhalten und alle für alle vier Kanäle die gleiche Zahl von Abtastpunkten zu erzielen, und daß der jeweils abtastende Reflexkopf nach Erreichen des Einschaltpunktes kurz in seiner momentanen Position gehalten und erst mit Beginn des folgenden Abtastintervalls wieder nach außen verfahren wird, wobei über die gesamte Gegenstandslange pro Längsintervall vier Werte zur Beschreibung des Konturverlaufs des Gegenstands im Speicher abgelegt werden, und daß in einer Bearbeitungsphase, die in einer der Meßphase entgegengesetzten Vorschubrichtung erfolgt, aus den in umgekehrter Reihenfolge dem Speicher entnommenen Konturwerten die Auslenkung des Schneidstrahls bzw. der jeweiligen Düse ermittelt wird, wobei das Rechnerprogramm stets die Differenzen der Meßwerte aufeinanderfolgender Intervalle bildet und den Schneidstrahl nach einem Interpolationsverfahren (Fig. 16) steuert und die Dicke der abgeschnitten Oberflächenschicht (Schale) sich aus einem wählbaren Versatz der dem Schrittantrieb aufgegebenen Koordinaten gegenüber den gespeicherten Konturwerten ergibt.

18. Vorrichtung nach Anspruch 17, dadurch gekennzeichnet, daß kurze Verdickungen des Gegenstandes ("Augen") programmgesteuert eingeebnet werden.

19. Vorrichtung nach Anspruch 17, dadurch gekennzeichnet, daß der Versatz der beiden Ebenen der Reflexköpfe mit ihren Lichtstrahlen einerseits und der Düsen mit ihren Schneidstrahlen andererseits in Längs- bzw. Axialrichtung des Gegenstands in der Bearbeitungsphase vom Rechnerprogramm berücksichtigt wird.

20. Vorrichtung zur Ausführung des Verfahrens nach den Ansprüchen 1 oder 2, insbesondere zum Spargelschälen, gekennzeichnet durch einen Behälter (80) mit einer im wesentlichen mittigen Öffnung (81) an seiner Oberseite (82) zum Einführen eines Spargels (83) in seiner Längsrichtung im wesentlichen senkrecht nach unten in den Behälter (80), mit zwei Führungsrollenpaaren (84, 85) längs dessen Längsachse (86), die untereinander längs der Längsachse (86) in Abstand voneinander und um 90° zueinander versetzt angeordnet sind und den Spargel (83) zwischen sich aufnehmen, mit Düsenpaaren (87,88), die den Führungsrollenpaaren (84, 85) zugeordnet sind, wobei die Rollen (89, 90, 91, 92) der Führungsrollenpaare (84, 85) jeweils an gabelförmigen Trägern (93, 94, 95, 96) im Behälter (80) drehbar gelagert sind und an jeweils einem Steg (97, 98, 99, 102) dieser Träger eine Düse (103, 104, 105, 106) angeordnet ist, und dadurch, daß die an den entsprechenden Stegen (97, 98, 99, 102) der beiden Träger (93, 94, 95, 96) eines Rollenpaares angeordneten beiden Düsen (103, 104, 105, 106) jeweils eine einander entgegengesetzte Strahlrichtung aufweisen, wobei der Abstand (P) zwischen den beiden von den Düsen abgegebenen Schneidstrahlen (S) etwas kleiner ist als der Durchmesser (R) des zwischen den beiden Rollen (89, 90, 91, 92) des jeweiligen Führungsrollenpaares eingeschlossenen Spargels (83).

21. Vorrichtung nach Anspruch 20, dadurch gekennzeichnet, daß die dem einen Führungsrollenpaar (84) zugeordneten Düsen (103, 104) dem den anderen Führungsrollenpaar (85) zugeordneten Düsen (105, 106) derart entgegengesetzt angeordnet sind, daß Gleichgewicht bezüglich der von den Schneidstrahlen ausgeübten Kräfte und Momente herrscht.

22. Vorrichtung nach Anspruch 20 oder 21, dadurch gekennzeichnet, daß der gabelförmige Träger (94, 96) jeweils einer Rolle (90, 92) jedes Führungsrollenpaares (84, 85) an einem am Behälter (80) befestigten Support (107, 108, 108') gegen Federdruck (109, 109', 110, 110') auf den Spargel (83) zu und von diesem weg schwenkbar gelagert ist.

23. Vorrichtung nach einem der Ansprüche 20 bis 22, dadurch gekennzeichnet, daß die Rollen (89, 90, 91, 92) der Führungsrollenpaare (84, 85) konkav ausgebildete Oberflächen aufweisen.

24. Vorrichtung nach Anspruch 23, dadurch gekennzeichnet, daß die Rollen (89, 90, 91, 92 ) doppelkegelstumpfförmig ausgebildet sind.

25. Verfahren nach den Ansprüchen 1 oder 2, dadurch gekennzeichnet, daß zur optischen Erfassung der Konturen im wesentlichen rotationssymmetrischer Gegenstände, insbesondere von Gemüsesorten wie Spargel, Schwarzwurzeln, Möhren und dergleichen, und zum Nachführen eines oder mehrerer Schneidstrahlen zum simultanen und/oder konsekutiven Entfernen von Oberflächenschichten dieser Gegenstände, eine CCD-Zeilenkamera mit einer zugehörigen elektronischen Auswertung verwendet wird.

26. Verfahren nach einem oder mehreren der Ansprüche 1, 2 und 25, dadurch gekennzeichnet, daß eine Druckflüssigkeit mit einem Druck von etwa 150 bar bis etwa 500 bar verwendet wird.

27. Verfahren nach Anspruch 26, insbesondere das Schälen von Spargel, dadurch gekennzeichnet, daß Wasser mit einem Druck von 250 bar verwendet wird.

28. Vorrichtung nach Anspruch 12, dadurch gekennzeichnet, daß mittels der Zentrierrolle bzw. -rollen (34, 35) eine Düse oder mehrere Düsen (46, 51) verschwenkbar ist bzw. sind.

29. Vorrichtung nach Anspruch 28, dadurch gekennzeichnet, daß über Seilzüge sämtliche am Arbeitsring (8) angeordneten Düsen mittels einer Zentrierrolle (34 oder 35) verschwenkbar sind.

## Claims

1. Method for simultaneously and/or consecutively removing surface layers of essentially rotationally symmetrical objects (32), in particular types of vegetables such as asparagus, salsify, carrots and the like, the removal being carried out by means of at least one jet of a pressurized liquid, such as water or the like, acting on the circumference of the object (32), and the jet and the object being moved relative to one another, characterized in that the jet or jets as cutting jet(s) (55) is or are arranged essentially transversely to the axial direction of the object (32) and is or are pivoted perpendicular to said axial direction in adaptation to the contour of the object and to set the desired layer thickness (52).

2. Method according to Claim 1, characterized in that the cutting jet (55) is moved in the axial direction and in the circumferential direction of the object.

3. Apparatus for carrying out the method according to Claims 1 or 2, in particular for peeling asparagus, characterized by a frame (1) which has a longitudinal axial direction and into which the respective asparagus (32) can be introduced into the axial direction in an essentially horizontal position by means of a gripper (17, 21, 22) guided in the longitudinal axial direction (K) on the frame (1) and can be retained, and by an operating ring (8) which is designed in such a way that it surrounds the introduced and retained asparagus is likewise guided in the longitudinal axial direction (K) relative to the frame (1), and has, on its circumference, a nozzle or a plurality of nozzles (46, 51) in a distributed manner for forming the cutting jet or the cutting jets (55) in such a way that, when the operating ring (8) is displaced along its guide (4, 5, 6, 7), the circumference of the asparagus (32) can be scraped, each nozzle (46, 51) being limitedly pivotable towards both sides essentially perpendicular to the longitudinal axial direction (K) in such a way that each cutting jet (55) can cut into the asparagus (32) on the one hand and can cut out of it again on the other hand.

4. Apparatus according to Claim 3, characterised in that the gripper consists of lazy tongs (19, 20, 27, 28) with gripper plates or shells (21, 22) at their pivotable ends, which tongs, including their actuation (25, 26, 29) are arranged on a rod (17) which, in turn, is coaxially displaceable and adjustable in a bearing (18.1, 18.2) which is mounted on the frame.

5. Apparatus according to Claim 4, characterized in that the axial guiding of the operating ring (8) consists of two rods (4, 5) and two slide pieces (6, 7) which are mounted on these rods, are attached to the operating ring (8) and are displaceable with the latter, an actuating device (9, 10, 11) which brings about the displacement engaging on at least one of the slide pieces (6, 7), and in that the abovementioned arrangement is fixedly connected by means of the ends of the rods (4, 5) to two pivoting discs (2, 3) mounted so as to be coaxially rotatable in the mutually opposite end walls (1', 1'') of the frame (1) and is limitedly pivotable with said pivoting discs essentially coaxially about the asparagus (32).

6. Apparatus according to Claim 5, characterized in that the actuating device for the operating ring (8) consists of a cable control (10) which acts on the slide piece (6) and has deflection rollers (11, 12) on the pivoting discs (2, 3) and of a motor drive (9) arranged on one of the pivoting discs (2).

7. Apparatus according to one of Claims 3 to 4, characterized in that, when there is a plurality of nozzles (46, 51), these are arranged on the operating ring (8) in such a way that the reaction forever and moments of the cutting jets delivered by said nozzles are virtually mutually neutralized, and essentially no resultant remains in relation to the guiding (4, 5, 6, 7) of the operating ring (8).

8. Apparatus according to Claim 3 or 7, characterized in that each nozzle (46, 51) is assigned an electromagnetic sensor (48), preferably operating by means of light, for scanning the contour of the asparagus and for monitoring the peel thickness during the peeling operation.

9. Apparatus according to Claim 3, 7 or 8, characterized in that a funnel (47) is arranged opposite each nozzle on the operating ring (8) for collecting the cutting jet (55).

10. Apparatus according to Claim 3, 7 or 8, characterized in that, in each case in a place transversely to the axial direction, two cutting jets (55) emerging in a direction opposed to one another are arranged on the operating ring (8) with such spacing from one another that each asparagus to be peeled can be gripped between them, the pivoting range of each cutting jet intercepting the contour of the asparagus.

11. Apparatus according to Claim 10, characterized in that at least two planes, each having two cutting jets (55), are provided with axial spacing from one another.

12. Apparatus according to Claim 11, characterized in that four planes having a total of eight cutting jets (55) are provided.

13. Apparatus according to one of Claims 3 to 12, characterized in that at least one centring roller (34, 35) is provided on the operating ring (8), which centring roller can be pivoted into and out of contact with the respective asparagus (32) and is arranged with axial spacing.

14. Apparatus according to Claim 4, characterized in that the rod (17) bearing the gripper cooperates with a timing ruler (74) which is mounted on the frame and by means of which the position of the rod (17) can be scanned by means of a light barrier (75) as a function of the asparagus length and can be fed into a control unit for controlling the individual operating steps.

15. Apparatus according to one of Claims 3 to 14, characterized in that the function cycle has the following steps, plotted over time, an electronic control unit carrying out the process control preferably using a microprocessor $\mu$P, A representing an output from the $\mu$P and E representing an input into the $\mu$P, and inputs signifying signals from sensors and outputs signifying signals to actuators:

$E_1$ asparagus (foot) present at loading

Sensor 60

position (corresponds to specific point on timing ruler 74)

$t_0$

Time t

$A_1$ move gripper rod 17 into

Motor 61 of gripper rod

loading position

$A_2$ actuate magnet 26 (grip

Magnet 26 of gripper

asparagus)

$A_3$ move up to $E_2$

Motor 61 of gripper rod

$E_2$ asparagus tip in machine

Sensor 33

$E_3$ reports position (depending

Sensor 78 on gripper rod to timing ruler 74

on asparagus length) of gripper rod

μP

$A_4$ move operating ring 8 into

Motor 9

starting position (depending on asparagus length)

$A_5$ pivot centring rollers 34 + 35

Magnets 38 + 39

up to asparagus 33

$E_4$ reports contour of asparagus

Sensor 48

$A_6$ pivot bearing plate 51

Motor 50

so that future water jet is still outside asparagus contour

$A_7$ switch on water jet

Nozzle 46

$A_8$ pivot bearing plate 51

Motor 50

so that water jet penetrates radially into asparagus up to previously set desired value of peeling depth

$t_1$

Forward stroke

$t_1$        $A_9$   move in direction of          Motor 9

asparagus tip (forward stroke)

Time t        $E_5$   operating ring 8 arrived

Sensor 56

$\mu P$     $A_{10}$   stop

Motor 9

$A_{11}$   switch off water jet

Nozzle 46

$A_{12}$   cease current supply, as the

springs 42 + 43 pivot rollers    Magnets 38
34 + 35 away from asparagus    + 39

$t_2$

from $t_2$ return stroke <u>without</u> peeling

| | | |
|---|---|---|
| $t_2$ | $A_{12}$ move in direction of asparagus foot (return stroke) | Motor 9 |
| time t | $A_{13}$ stop in starting position | Motor 9 |
| | $A_{14}$ switch on one water jet | one nozzle 46 |
| | $A_{15}$ pivot bearing plate 51 with | |
| | said nozzle 46 transversely through asparagus → asparagus cut off and drops down | one Motor 50 |
| | $A_{16}$ magnet pivots end plate 57 downwards | Magnet |
| $\mu r$ | $A_{17}$ switch off water jet | Nozzle 46 |
| | $A_{18}$ move operating ring 8 in direction of asparagus foot | Motor 9 |
| | $E_6$ operating ring 8 arrived (home position 1 is the same for all asparagus lengths + lies beyond asparagus foot) | Home position 1 Sensor (swtich) |
| | $A_{19}$ stop | Motor 9 |
| | $A_{20}$ move gripper rod 17 in direction of home position 2 | Motor 61 |
| | $E_7$ gripper rod 17 arrived | Sensor on timing ruler |
| | $A_{21}$ stop | Motor 61 |
| $t_3$ | | |

from $t_2$ return stroke with peeling

---

| | | |
|---|---|---|
| $t_2$ | $A_{13}$ pivot rings 2 + 3 by required angle $\alpha$ | Magnet 13 |
| time t | $A_{14}$ pivot centring rollers 34 + 35 up to asparagus | Magnets 38 + 39 |
| | $E_6$ report contour of asparagus | Sensor 48 |
| $\mu P$ | $A_{15}$ pivot bearing plate 51 so that future water jet is still outside asparagus | Motor 50 |
| | $A_{16}$ switch on water jet | Nozzle 46 |
| | $A_{17}$ pivot bearing plate 51 so that water jet penetrates radially into asparagus up to previously set desired value of peeling depth | Motor 50 |
| | $A_{18}$ move in direction of asparagus foot (return stroke) | Motor 9 |
| | $A_{19}$ stop in starting position | Motor 9 |
| | $A_{20}$ switch off all nozzles apart from one | Nozzle 46 |

continue at $A_{15}$ of case a

16. Apparatus according to one or more of Claims 8 to 11, characterized in that, for the optical recording of the contours of essentially rotationally symmetrical objects, in particular types of vegetables such as asparagus, salsify, carrots and the like, and for readjusting one or more cutting jets for simultaneously and/or consecutively removing surface layers of these objects, four light tracers in the form of reflex heads (R1, R2, R3, R4) are arranged in pairs opposite each other around the object in a first plane, which light tracers can be pivoted in each case by motor gear units (M1, M2, M3, M4) over an angular range, have different switching-on and switching-off points at different light intensities, and those basic directions are essentially perpendicular to one another, in that, in a second plane which is offset relative to the first plane in the longitudinal direction of the object, four nozzle units are arranged in each case in said longitudinal direction next to the four light tracers and are likewise provided with motor gear units ($M_{Y1}$, $M_{Y2}$, $M_{Y3}$, $M_{Y4}$), in that a further motor gear unit ($M_2$) is provided to produce a relative movement between the object on the one hand and the reflex heads and nozzle units on the other hand, in that additionally a computer, a clock generator (T) and five control units are provided, the first four control units being connected via input lines (R) to the four reflex heads and all five control units being connected via output lines to the motor gear units, the first four control units additionally being connected on the one hand via a data bus (Z) and on the other hand via control lines (Y) to the computer, and finally the computer being connected to the clock generator and the clock generator to all the control units.

17. Apparatus according to Claim 16, characterized in that, in one measuring phase, each of the four reflex heads (R1, R2, R3, R4) is moved via the clock generator stepwise and periodically up to the switching-on point towards the edge of the asparagus and subsequently moved away again up to the switching-off point, the reflex heads and the object moving evenly relative to one another (z-direction) beyond the length of the object in such a way that a zig-zag-shaped relative movement of the reflex heads occurs over the length of the object, the number of clock pulses always constituting a measure of the momentary deflection of the light beam of the respective reflex head, the count being transmitted to a memory of the control computer when the edge of the object and thus the switching-on point has been reached, in that the z-direction is divided into intervals of equal length in order to obtain an allocation of the stored values to the longitudinal feed in the z-direction and to achieve the same number of scanning points for all four channels, and in that, after reaching the switching-on point, the respectively scanning reflex head is stopped briefly in its momentary position and is only moved outwards again at the beginning of the following scanning interval, four values to describe the contour pattern of the object being deposited in the memory over the entire length of the object per length interval, and in that, in a processing phase which takes place in a feed direction opposite to the measuring phase, the deflection of the cutting jet or of the respective nozzle is determined from the contour values taken from the memory in reverse order, the computer program always forming the difference between the measured values of successive intervals and controlling the cutting jet according to an interpolation method (Figure 16), and the thickness of the surface layer (peel) cut off resulting from a selectable offset of the coordinates, passed onto the stopping drive, relative to the stored contour values.

18. Apparatus according to Claim 17, characterized in that short thickenings of the object ("eyes") are smoothed by program control.

19. Apparatus according to Claim 17, characterized in that the offset of the two planes of the reflex heads with their light beams on the one hand and of the nozzles with their cutting jets on the other hand in the longitudinal or axial direction of the object is taken into consideration by the computer program in the processing phase.

20. Apparatus for carrying out the method according to Claims 1 or 2, in particular for peeling asparagus, characterized by a container (80) having an essentially central opening (81) on its top side (82) for introducing an asparagus (83) in its longitudinal direction essentially vertically downwards into the container (80), having two pairs of guide rollers (84, 85) along its longitudinal axis (86) which are arranged one below the other along the longitudinal axis (86), spaced apart, and offset by 90° relative to one another and which receive the asparagus (83) between them, having pairs of nozzles (87, 88) which are assigned to the pairs of guide rollers (84, 85), the rollers (89, 90, 91, 92) of the pairs of guide rollers (84, 85) each being mounted rotatably on fork-shaped carriers (93, 94, 95, 96) in the container (80), and a nozzle (103, 104, 105, 106) being arranged in each case on a web (97, 98, 99, 102) of these carriers, and characterized in that the two nozzles (103, 104, 105, 106) arranged on the corresponding webs (97, 98, 99, 102) of the two carriers (93, 94, 95, 96) of a pair of rollers each have a jet direction opposed to each other, the distance (P) between the two cutting jets (S) given off by the nozzles being slightly smaller than the diameter (R) of the asparagus (83) enclosed between the two rollers (89, 90, 91, 92) of the respective pair of guide rollers.

21. Apparatus according to Claim 20, characterized in that the nozzles (103, 104) assigned to the one pair of guide rollers (84) are arranged in the opposite direction to the nozzles (105, 106) assigned to the other pair of guide rollers (85) in such a way that there is equilibrium in terms of the forces and moments exerted by the cutting jets.

22. Apparatus according to Claim 20 or 21, characterized in that the fork-shaped carrier (94, 96) in each case of a roller (90, 92) of each pair of guide rollers (84, 85) is mounted on a support (107, 108, 108'), attached to the container (80), so as to be pivotable counter to spring pressure (109, 109', 110, 110') towards the asparagus (83) and away from the latter.

23. Apparatus according to one of Claims 20 to 22, characterized in that the rollers (89, 90, 91, 92) of the pairs of guide rollers (84, 85) have surfaces of concave design.

28

**24.** Apparatus according to Claim 23, characterized in that the rollers (89, 90, 91, 92) are designed in the shape of a double truncated cone.

**25.** Method according to Claims 1 or 2, characterized in that a CCD line scan camera with associated electronic evaluation is used for the optical recording of the contours of essentially rotationally symmetrical objects, in particular of types of vegetables such as asparagus, salsify, carrots and the like, and for readjusting one or more cutting jets for simultaneously and/or consecutively removing surface layers of these objects.

**26.** Method according to one or more of Claims 1, 2 and 25, characterized in that a pressurized liquid is used at a pressure of about 150 bar to about 500 bar.

**27.** Method according to Claim 26, in particular the peeling of asparagus, characterized in that water is used at a pressure of 250 bar.

**28.** Apparatus according to Claim 12, characterized in that a nozzle or a plurality of nozzles (46, 51) is or are pivotable by means of the centring roller or rollers (34, 35).

**29.** Apparatus according to Claim 28, characterized in that all the nozzles arranged on the operating ring (8) can be pivoted via cable controls by means of a centring roller (34 or 35).

**Revendications**

**1.** Procédé pour enlever simultanément et/ou consécutivement les couches de surface de produits (32) à symétrie sensiblement de rotation, en particulier des légumes tels que des asperges, des salsifis noirs, des carottes et des produits similaires, l'enlèvement étant effectué au moyen d'au moins un jet de fluide sous pression tel que l'eau ou autre, attaquant la surface du produit (32), le jet et le produit étant mobiles l'un par rapport à l'autre, caractérisé par le fait que le ou les jet(s) sont des jet(s) coupant(s) (55) placé(s) sensiblement perpendiculairement à la direction axiale du produit (32) et oscillant verticalement par rapport à ceux-ci en s'adaptant au contour des produits et en réglant la profondeur (52) souhaitée de couche.

**2.** Procédé selon la revendication 1, caractérisé par le fait que le jet coupant (55) est mobile suivant la direction axiale et la surface externe du produit.

**3.** Dispositif pour la mise en oeuvre du procédé selon les revendications 1 ou 2, en particulier pour peler les asperges, caractérisé par le fait qu'il comporte un bâti (1) présentant une direction axiale longitudinale, dans lequel l'asperge correspondante (32) peut être amenée et bloquée axialement en position sensiblement horizontale, au moyen d'une pince (17, 21, 22) guidée selon la direction axiale longitudinale (K) du produit (1); et un anneau (8) de travail constitué de façon a entourer l'asperge introduite et bloquée et également guidé selon la direction axiale longitudinale (K) par rapport au produit (1) et comportant à sa périphérie une ou plusieurs buses (46, 51) réparties pour la formation du jet coupant ou des jets coupants (55), de façon que par un déplacement de l'anneau (8) de travail le long de sa glissière (4,5,6,7), la surface externe de l'asperge soit balayée, chaque buse (46, 51) pouvant pivoter de façon limitée entre deux positions, sensiblement perpendiculairement à la direction axiale longitudinale (K), de façon que chaque jet coupant (55) puisse couper d'une part sur l'intérieur et d'autre part aussi sur l'extérieur.

**4.** Dispositif selon la revendication 3, caractérisé par le fait que la pince est constituée d'une cisaille Nuremberg (19, 20, 27, 28) comportant à ses extrémités pivotables des lames ou des plaques (21, 22), celle-ci étant placée, y compris sa commande (25, 26, 29), sur une tringle (17) qui à son tour est coulissable et réglable coaxialement en une position voulue (18.1, 18.2).

**5.** Dispositif selon la revendication 4, caractérisé par le fait que le guidage axial de l'anneau (8) de travail est réalisé au moyen de deux tringles (4, 5) et deux glissières (6, 7) montées sur ces tringles, fixées sur l'anneau (8) de travail et pouvant coulisser avec celui-ci, au moins une des glissières (6, 7) venant en prise avec un dispositif d'actionnement (9, 10,11) effectuant le coulissement, et que l'arrangement précité est assemblé rigidement au moyen des extrémités de tringles (4,5) avec deux rondelles pivotantes (2,3) pouvant tourner coaxialement dans les parois frontales (1', 1'') du bâti (1) placées l'une en face de l'autre, et pouvant pivoter de façon limitée par rapport à celui-ci, sensiblement coaxialement autour de l'asperge (32).

6. Dispositif selon la revendication 5, caractérisé par le fait que le dispositif d'actionnement de l'anneau (8) de travail est constituée d'une tige de traction (10) venant en prise avec la glissière (6), la tige comportant des galets de renvoi (11, 12) placés sur les rondelles pivotantes (2,3) et d'un entraînement moteur (9) placé sur une des rondelles pivotantes (2).

7. Dispositif selon l'une des revendications 3 et 4, caractérisé par la présence de plusieurs buses (46, 51) placées sur l'anneau (8) de travail de telle sorte que les forces et moments de réaction des jets coupants provenant de celles-ci se neutralisent pratiquement les uns les autres et qu'il ne reste sensiblement aucune résultante concernant le guidage (4, 5, 6, 7) de l'anneau (8) de travail.

8. Dispositif selon la revendication 3 ou 7, caractérisé par le fait qu'à chaque buse (46, 51) est affecté un capteur (48) travaillant électromagnétiquement, de préférence avec la lumière, pour balayer le contour de l'asperge et pour contrôler l'épaisseur de la pelure pendant le processus d'épluchage.

9. Dispositif selon la revendication 3, 7 ou 8, caractérisé par le fait qu'un entonnoir (47) est disposé sur l'anneau (8) de travail en face de chaque buse pour recueillir le jet coupant (55).

10. Dispositif selon la revendication 3, 7 ou 8, caractérisé par le fait que dans chaque plan, transversalement à la direction axiale, sont placés deux jets coupants (55) sortant de façon opposée l'un par rapport à l'autre sur l'anneau (8) de travail, à une distance telle que chaque asperge à éplucher soit entourée par ceux-ci, le domaine de pivotement de chaque jet coupant croisant le contour de l'asperge.

11. Dispositif selon la revendication 10, caractérisé par le fait que sont prévus au moins deux plans distants l'un par rapport à l'autre axialement, comportant chacun deux jets coupants (55).

12. Dispositif selon la revendication 11, caractérisé par le fait que l'on prévoit quatre plans avec au total huit jets coupants (55).

13. Dispositif selon l'une des revendications 3 à 12, caractérisé par le fait que l'on prévoit sur l'anneau (8) de travail au moins un rouleau de centrage (34, 35) disposé à distance axiale et pouvant pivoter en position proche et éloignée de l'asperge concernée.

14. Dispositif selon la revendication 4, caractérisé par le fait que la tringle (17) supportant la pince travaille en coopération avec un règle graduée (74) solidaire du bâti, grâce à laquelle la position de la tringle (17) est déterminable en fonction de la longueur de l'asperge par une barrière optique (75) et peut être envoyée sur une unité de régulation pour le régulation d'un pas de travail unitaire.

15. Dispositif selon l'une des revendications 3 à 14, caractérisé par le fait que le cycle de fonctionnement présente les étapes suivantes, appliquées dans le temps, une unité de régulation électronique exécutant la phase de procédé, de préférence par utilisation d'un microprocesseur $\mu$P, A représentant une sortie du microprocesseur $\mu$P et E une entrée dans le microprocesseur $\mu$P, et les signaux d'entrée de capteurs et les signaux de sortie des organes moteurs ayant les significations représentées dans les cases:

```
                    E1 Asperge (pied) présente en position de travail
                    (correspondant à l'endroit défini par la règle
                    <----------------------------------------------------Capteur 60
    t0 ---          graduée 74)

                    A1 Déplacement de la tringle d'accrochage 17 en
                    ---------------------------------------------------->Moteur 61 de la tringle
                    position de travail                                   d'accrochage
  temps t

                    A2 Actionnement de l'aimant 26
                    --------------------------------------------------->Aimant 26 de la pince
                    (accrochage de l'asperge)

                    A3 Déplacement jusqu'à E2
                    --------------------------------------------------->Moteur 61 de la tringle
                                                                          d'accrochage
    µP
                    E2 Tête d'asperge en machine
                    <---------------------------------------------------Capteur 33

                    E3 Affichage de la position  (dépendant de la     Capteur 75
                    longueur de l'asperge) de la tringle              sur la tringle
                    <----------------------------------------------- d'accrochage de la règle
                    d'accrochage                                      graduée 74

                    A4 Déplacement de l'anneau 8 de travail en position
                    ----------------------------------------------->Moteur 9
                    de départ (dépendant de la longueur de l'asperge)

                    A5 Rotation des rouleaux de centrage 34 + 35
                    ----------------------------------------------->Aimants 38 + 39
                    jusqu'à l'asperge 32

                    E4 Affichage du contour de l'asperge
                    <---------------------------------------------Capteur 48

                    A6 Rotation de la plaque de support 51 de
                    façon que le jet d'eau à venir soit encore
                    ----------------------------------------------->Moteur 50
                    à l'extérieur du contour de l'asperge

                    A7 Positionnement du jet d'eau
                    ----------------------------------------------->Buse 46

                    A8 Rotation de la plaque de support 51 de
                    façon que le jet d'eau pénètre radialement
                    ----------------------------------------------->Moteur 50
                    dans l'asperge jusqu'à la valeur affichée
                    définie au préalable pour la profondeur de pelage
```

31

COURSE ALLEE

```
t1
        A9 Déplacement de la direction de la tête
        ---------------------------------------------------->Moteur 9
        de l'asperge (Avance)

temps
t       E5 Arrivée de l'anneau 8 de travail
     <--------------------------------------------------------Capteur 5

        A10 Arrêt
        --------------------------------------------------->Moteur 9

        A11 Arrêt du jet d'eau
        --------------------------------------------------->Buse 46

        A12 Vidange par rotation des ressorts 42+43
        -------------------------------------------------->Aimants 38 +39
        des rouleaux 34+35 loin de l'asperge
t2
```

32

Cas a

ab t₂ COURSE RETOUR SANS PELAGE

t₂

A12 Déplacement de la direction du pied
de l'asperge (retour)
----------------------------------------------------------------->Moteur 9

A13 Arrêt en position de départ
----------------------------------------------------------------->Moteur 9

A14 Arrivée d'un jet d'eau
----------------------------------------------------------------->Une buse 46

A15 Rotation de la plaque de support 51 avec cette
buse 46  transversalement à travers l'asperge,
----------------------------------------------------------------->Un moteur 50
coupe de l'asperge et chute vers le bas

A16 L'aimant fait tourner la plaque de tête 57
----------------------------------------------------------------->Aimant
vers le bas

A1 Arrêt du jet d'eau
----------------------------------------------------------------->Buse 46

A18 Déplacement de l'anneau 8 de travail en direction
----------------------------------------------------------------->Moteur 9
du pied de l'asperge

E6 Arrivée de l'anneau 8 de travail (La position        Position 1 de départ
----------------------------------------------------------------->du capteur
de départ 1 est la même pour toutes les longueurs       (interrupteur)
d'asperge + reste en dehors et au dessus du
pied de l'asperge

µP

A19 Arrêt
----------------------------------------------------------------->Moteur 9

A20 Déplacement de la tringle d'accrochage 17 en
----------------------------------------------------------------->Moteur 61
direction de la position de départ 2

E7 Arrivée de la tringle d'accrochage 17
<-----------------------------------------------------------------Capteur sur
la règle graduée

A21 Arrêt
----------------------------------------------------------------->Moteur 61

t₃

EP 0 324 155 B1

```
                                    Cas b

                          ab t₂ RETOUR AVEC PELAGE

  t₂
                    A13 Rotation des anneaux 2+3 autour d'un angle donné

                    -------------------------------------------------------->Aimant 13

                    A14 Rotation des rouleaux de centrage 34+35

                    -------------------------------------------------------->Aimants 38 + 39
                    jusque sur l'asperge

temps t             E6 Affichage du contour de l'asperge

                    <-------------------------------------------------------Capteur 48

 µP
                    A15 Rotation des plaques de support 51, de façon que

                    ------------------------------------------------------->Moteur 50
                    le jet d'eau futur soit encore à l'extérieur de l'asperge

                    A16 Arrivée du jet d'eau

                    ------------------------------------------------------->Buse 46

                    A17 Rotation des plaques de support 51, de façon que

                    ------------------------------------------------------->Moteur 50
                    le jet d'eau pénètre radialement dans l'asperge
                    jusqu'à la valeur affichée définie auparavant
                    pour la profondeur de pelage

                    A18 Déplacement de la direction du pied

                    ------------------------------------------------------->Moteur 9
                    de l'asperge (retour)

                    A19 Arrêt en position de départ

                    ------------------------------------------------------->Moteur 9

                    A20 Jusqu'à sur une buse toute suite interrompue

                    ------------------------------------------------------->Buse 46
                    avec A15 du cas a
```

**16.** Dispositif selon une ou plusieurs des revendications 8 à 11, caractérisé par le fait que pour la détection optique des contours des produits à symétrie sensiblement ronde, en particulier de légumes comme des asperges, des salsifis noirs, des carottes et des produits similaires, et pour l'orientation d'un ou plusieurs jets coupants pour enlever simultanément et/ou consécutivement des couches de surface de ces produits, on place dans un premier plan quatre points différents de mise en circuit et de mise hors circuit, pouvant pivoter chacun dans un domaine angulaire à l'aide d'unités d'entraînement motorisées (M1, M2, M3, M4) par des capteurs de lumière présentant des intensités de lumière différentes, sous forme de têtes réflexives (R1, R2, R3, R4) se faisant face deux par deux autour du produit, leurs directions principales étant sensiblement perpendiculaires les unes aux autres; que, dans un deuxième plan décalé par rapport au premier plan selon la direction longitudinale de l'objet, on place quatre unités de buses, respectivement placées à côté des quatre capteurs lumineux dans cette direction longitudinale et également munies d'unités d'entraînement motorisées (MY1, MY2, MY3, MY4); qu'une autre unité d'entraînement motorisée (Mz) est prévue pour produire un mouvement relatif entre, d'une part, le produit et, d'autre part, les têtes réflexives et les buses unitaires; que, de plus, on prévoit un ordinateur, une horloge (T) et cinq unités de commande, les quatre premières unités de commande étant reliées par des conduites d'amenée (L) avec les quatre têtes réflexives et l'ensemble des cinq unités de commande étant reliées par des conduites de sortie avec les unités d'entraînement motorisées; de plus, les quatre premières unités de commande étant reliés d'une part par un bus de données (Z) et, d'autre part, par une ligne de commande (Y) avec l'ordinateur et, finalement, l'ordinateur étant relié avec l'horloge et l'horloge avec l'ensemble des unités de commande.

**17.** Dispositif selon la revendication 16, caractérisé par le fait que dans une phase de mesure, chacune des quatre têtes réflexives (R1, R2, R3, R4) est amenée, par l'intermédiaire de l'horloge, pas à pas et périodiquement sur le bord de l'asperge, jusqu'à ce qu'au point de mise en circuit et ensuite ramenée de nouveau jusqu'au point de mise hors circuit; les têtes réflexives et le produit se déplaçant régulièrement (selon la direction -Z) relativement les uns par rapport aux autres sur la longueur du produit, de façon qu'il se forme un mouvement relatif en forme de zig-zag des têtes réflexives sur la longueur du produit; le nombre des impulsions cycliques représentant toujours une mesure pour la déviation momentanée du rayon lumineux des têtes réflexives respectives; la position du compteur lors de l'arrivée du bord de l'objet et donc du point de mise en circuit, étant transmise à une mémoire de l'ordinateur de commande, de façon que la direction Z soit divisée en intervalles de même longueur, pour obtenir un classement des valeurs mémorisées de l'avancement longitudinal dans la direction Z et obtenir pour l'ensemble des quatre canaux, le même nombre de points de balayage et de façon que la tête réflexive captante, après avoir atteint le point de mise en circuit, soit maintenue peu de temps dans une position momentanée et soit déplacée de nouveau vers l'extérieur seulement avec le début de l'intervalle de balayage suivant; sur toute la longueur du produit, par intervalle de longueur, quatre valeurs pour décrire le tracé du contour de l'objet, étant stockées dans la mémoire; et, dans une phase de traitement qui a lieu dans une direction d'avancement opposée à la phase de mesure, la déviation des jets coupants, respectivement des buses unitaires, étant calculée à partir des valeurs de contour provenant de la mémoire en série inversée, le programme de l'ordinateur formant toujours les différences des valeurs mesurées des intervalles se suivant les uns les autres, et commandant le jet coupant selon un procédé d'interpolation (fig. 16) et l'épaisseur de la couche de surface à couper (pelure) résultant d'un déplacement déterminable des coordonnées données par l'entraînement pas à pas par rapport aux valeurs de contour en mémoire.

18. Dispositif selon la revendication 17, caractérisé par le fait qu'on égalise, commande du programme, de faibles épaississements (oeils) du produit.

19. Dispositif selon la revendication 17, caractérisé par le fait que l'on tient compte, dans la phase de travail de l'ordinateur, du chevauchement, d'une part, de deux angles des têtes réflexives avec leurs rayons lumineux et, d'autre part, des buses avec leurs jets coupants, en directions longitudinale et respectivement axiale du produit.

20. Dispositif pour la mise en oeuvre du procédé selon la revendication 1 ou 2, en particulier pour l'épluchage d'asperges, caractérisé par le fait qu'il comporte un récipient (80) avec une ouverture (81) sensiblement centrale dans sa paroi supérieure (82) pour l'amenée d'une asperge (83) suivant sa direction longitudinale, sensiblement verticalement vers le bas dans le récipient (80), avec deux paires de rouleaux de guidage (84, 85) le long de leurs axes longitudinaux (86), qui sont placés l'un sous l'autre en étant décalés de 90#, distants l'un de l'autre le long de l'axe longitudinal (86) et qui supportent entre eux l'asperge (83), avec des paires de buses (87, 88) qui sont adjacentes aux paires de rouleaux de guidage (84, 85); les rouleaux (89, 90, 91, 92) des paires de rouleaux de guidage (84, 85) étant mobiles en rotation chacun sur des supports fourchus (93, 94, 95, 96) et une buse (103, 104, 105, 106) étant placée sur chaque entretoise (97, 98, 99, 102) de ces supports, et caractérisé par le fait que les deux buses (103, 104, 105, 106) placées sur les entretoises correspondantes (97, 98, 99, 102) des deux supports (93, 94, 95, 96) d'une paire de rouleaux présentent chacune une direction de jet opposée l'une à l'autre, la distance (P) entre les deux jets coupants (S) provenant des buses étant légèrement inférieur au diamètre (R) de l'asperge (83) maintenue entre les deux rouleaux (89, 90, 91, 92) de chaque paire de rouleaux de guidage.

21. Dispositif selon la revendication 20, caractérisé par le fait que les buses (103, 104) adjointes à une paire (84) de rouleaux de guidage sont placées de façon à être opposées aux buses (105, 106) adjointes à l'autre paire (85) de rouleaux de guidage, pour que règne l'équilibre concernant les forces et les moments exercés par les jets coupants.

22. Dispositif selon la revendication 20 ou 21, caractérisé par le fait que le support fourchu (94, 96) d'un rouleau (90,92) de chaque paire de rouleaux de guidage (84,85) est monté sur un support (107, 108, 108') fixé au récipient (80) en pouvant pivoter à l'encontre de l'action d'un ressort (109, 109', 110, 110') vers l'asperge et en s'éloignant de celle-ci.

23. Dispositif selon l'une des revendications 20 à 22, caractérisé par le fait que les rouleaux (89, 90, 91, 92) des paires de rouleaux de guidage (84, 85) présentent des surfaces de forme concave.

**24.** Dispositif selon la revendication 23, caractérisé par le fait que les rouleaux (89, 90, 91, 92) sont de forme doublement conique.

**25.** Procédé selon la revendication 1 ou 2, caractérisé par le fait que pour la saisie optique des contours des objets à symétrie sensiblement de rotation, en particulier pour des légumes tels que des asperges, salsifis noirs, carottes et autres,et pour l'orientation d'un ou plusieurs jets coupants pour l'enlèvement simultané et/ou consécutif de couches de surface de ces objets, on utilise une caméra à ligne CCD avec une évaluation électronique spécifique.

**26.** Procédé selon une ou plusieurs des revendications 1, 2 et 25, caractérisé par le fait qu'on utilise un fluide sous pression avec une pression comprise entre environ 150 bars et environ 500 bars.

**27.** Procédé selon la revendication 26, en particulier l'épluchage d'asperges, caractérisé par le fait qu'on utilise de l'eau sous une pression de 250 bars.

**28.** Dispositif selon la revendication 12, caractérisé par le fait qu'une buse ou plusieurs buses (46, 51) peut ou respectivement peuvent pivoter au moyen du ou respectivement des rouleaux de centrage (34, 35).

**29.** Dispositif selon la revendication 28, caractérisé par le fait que des buses placées sur un anneau (8) de travail peuvent pivoter ensemble au moyen du rouleau de centrage (34 ou 35) par l'intermédiaire des tiges de traction.

Fig. 1

Fig. 2

Einzelheit bei 36

Fig. 3

Fig. 4a

Fig. 5

Fig. 4

Fig. 6

*Fig. 7*

*Fig. 8*

Fig. 9

Fig. 10

Fig. 13

Fig. 11

Fig. 12

R1 optischer Reflexkopf
(Lichttaster) mit
Sender (S) und
Empfänger (E)

M1

S  E

Lichtstrahl auf
Objektrand

R4

E
S

M4

M2

S
E

R2

in Grundrichtung

Anfahren des
Einschaltpunktes

E  S

R3

M3 Motor- Getriebeinheit
zum Schwenken des
Reflexkopfes und
der Schneiddüsen

Fig. 14

47

Relativbewegung $R_n$
des Lichttasters

z- Intervall

Fig. 15

Konturverlauf

$Y_n$

Einschaltpunkt

$Z_n$

wegfahren

Ausschaltpunkt

anfahren

$Y_{n+1}$

Stop bis zum
Folgeintervall

$Z_{n+1}$

Fig. 15a

*Vereinfachtes Interpolationsverfahren zur Auslenkung des Schneidstrahles*

Fig. 16

Fig. 16a

## BLOCKSCHALTBILD

Fig. 17